# EUROPEAN PATENT APPLICATION

(11) **EP 3 361 816 A1**
(43) Date of publication of application: **15.08.2018**
(21) Application number: 15908539.8
(22) Date of filing: 18.11.2015
(51) Int. Cl.: H04W 76/10, H04W 88/14, H04W 88/16

(54) **SERVICE FLOW TRANSMISSION METHOD AND APPARATUS**

(71) Applicant: Huawei Technologies Co., Ltd., Longgang District Shenzhen, Guangdong 518129 (CN)
(72) Inventor: CHEN, Zhongping, Shenzhen Guangdong 518129 (CN); ZHOU, Han, Shenzhen Guangdong 518129 (CN); XIA, Yuan, Shenzhen Guangdong 518129 (CN)
(74) Representative: Pfenning, Meinig & Partner mbB
(86) International application number: PCT/CN2015/094907
(87) International publication number: WO 2017/084042

(57) **Abstract**

Embodiments of the present invention disclose a service flow transmission method and apparatus. The method includes: A first gateway device determines a target service currently performed by UE, performs a bearer processing operation, so as to obtain a target bearer corresponding to the target service, and binds a service flow of the target service to the target bearer; and the first gateway device anchors the target bearer to a target gateway, and implements, by using the target gateway, service flow transmission between the UE and a network that corresponds to the target service. It can be learned that, a service flow can be bound to a bearer obtained after performing a bearer operation and the bearer is anchored to an appropriate gateway, thereby implementing flexible service flow deployment, and improving service flow deployment flexibility.

## Description

### TECHNICAL FIELD

Embodiments of the present invention relate to the field of wireless communications technologies, and specifically to a service flow transmission method and apparatus.

### BACKGROUND

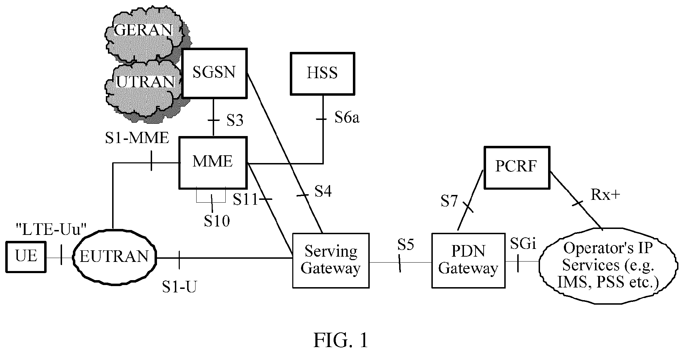

To cope with challenges from wireless broadband technologies, and keep leading advantages of networks of the 3rd Generation Partnership Project (3GPP, the 3rd Generation Partnership Project), 3GPP drew up a Long Term Evolution (LTE, Long Term Evolution) project for mobile communications networks at the end of 2004. A new mobile communications network architecture is defined under guidance of the LTE project, the new mobile communications network architecture is flatter than existing 2G and 3G networks, and only a packet switched domain (PS, Packet Switching Domain) is reserved. Therefore, the new mobile communications network architecture may be referred to as an evolved packet system (EPS, Evolved Packet System). Moreover, a network architecture of the EPS may be shown in FIG. 1, and FIG. 1 is a schematic diagram of a network architecture of an EPS disclosed in the prior art. In the EPS network architecture shown in FIG. 1, an evolved packet core (EPC, Evolved Packet Core) mainly includes three logical functional entities: a mobility management entity (MME, Mobility Management Entity), a serving gateway (S-GW, Serving Gateway), and a packet data network gateway (P-GW, Packet Data Network Gateway). The MME is mainly responsible for non-access stratum (NAS, Non-Access) signaling and NAS signaling encryption, roaming and tracking, allocation of a provisional identity to a user, a security function, and the like, and corresponds to a control plane part of a serving GPRS support node (SGSN, Serving GPRS Support Node) in a GERAN/UTRAN network. The S-GW is a local mobility anchor or a mobility anchor in a 3GPP system, and has a function of lawful interception of related information. The P-GW is mainly responsible for related functions such as policy enforcement, charging, and lawful interception.

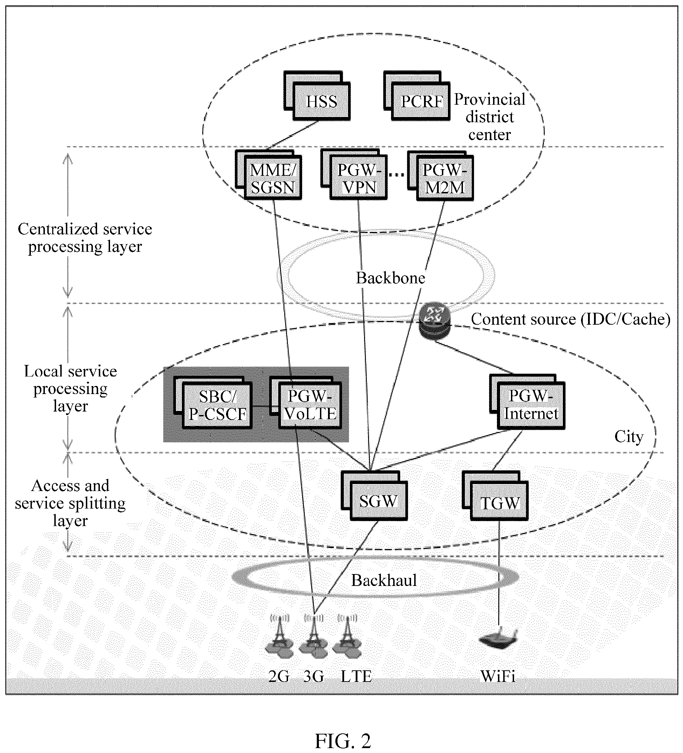

In the EPS network architecture shown in FIG. 1, when user equipment (UE, User Equipment) accesses the EPC, a PDN connection (also referred to as a "session connection ") to which an access point name (APN, Access Point Name) points first needs to be created for the UE based on APN information (configured by default or provided by the UE). Moreover, a corresponding IP address is provided to the UE in a session connection creation process, a first bearer created in the session connection is referred to as a default bearer (keeping an active state in an entire session connection period), and a bearer created subsequently is a dedicated bearer. When the UE performs a service, flows that have a same UE IP address and that flow toward a same PDN network (that is, having a same APN attribute) are converged into one session connection, and further, flows that have a same quality of service (QoS, Quality of Service) attribute are also converged into one bearer. Moreover, network deployment for the EPS network architecture shown in FIG. 1 may be shown in FIG. 2, and FIG. 2 is a schematic diagram of network deployment of an EPS disclosed in the prior art. In the network deployment shown in FIG. 2, one service flow is bound to one bearer, one bearer is bound to one PDN connection, one PDN connection is anchored to one particular gateway, service flows that have same APN information finally access a same PDN network, and service flows that have different APN information finally access different PDN networks. It can be learned that, the network deployment of the current EPS can implement only flexible access of a service flow to a PDN network, but cannot implement flexible deployment of a service flow in a PDN network. It can be learned that, during deployment of a service flow in the current EPS, flexibility is low.

### SUMMARY

Embodiments of the present invention disclose a service flow transmission method and apparatus, so as to improve flexibility of service flow deployment.

According to a first aspect of the embodiments of the present invention, a service flow transmission method is disclosed. The method includes the following steps.

A first gateway device determines a target service currently performed by user equipment UE, where the target service may be a service of accessing a website, a call service, an instant messaging service, or the like.

The first gateway device performs a bearer processing operation, so as to obtain a target bearer corresponding to the target service, and binds a service flow of the target service to the target bearer, where the bearer processing operation may include a bearer creation process or a bearer modification process.

The first gateway device anchors the target bearer to a target gateway, and implements, by using the target gateway, service flow transmission between the UE and a network that corresponds to the target service, where the anchoring the target bearer to a target gateway is sending context information of the target bearer to the target gateway. Therefore, flexible service flow deployment is implemented in a manner of binding the service flow to the target bearer obtained by performing the bearer processing operation, and anchoring the target bearer to the target gateway.

In a first possible implementation of the first aspect of the embodiments of the present invention, the method further includes the following step.

The first gateway device selects the target gateway for the target service according to a correspondence between a service and gateway deployment. In a manner of selecting the target gateway according to the correspondence between a service and gateway deployment, different target gateways can be selected for service flows that have same APN information, and then the service flows that have the same APN information access different PDN networks, so as to implement flexible service flow deployment in the PDN networks.

With reference to the first possible implementation of the first aspect of the embodiments of the present invention, in a second possible implementation of the first aspect of the embodiments of the present invention, the selecting, by the first gateway device, the target gateway for the target service according to a correspondence between a service and gateway deployment includes the following steps.

The first gateway device determines, according to the correspondence between a service and gateway deployment, a list of target gateways capable of serving the UE, where the target gateway list includes a plurality of gateways capable of serving the UE. Therefore, the first gateway device can select, according to an actual requirement of the target service, an appropriate gateway (such as a gateway at a preferable location) as the target gateway from the plurality of gateways included in the target gateway list.

The first gateway device determines, in the plurality of gateways included in the target gateway list, a gateway as the target gateway.

With reference to the second possible implementation of the first aspect of the embodiments of the present invention, in a third possible implementation of the first aspect of the embodiments of the present invention, the determining, by the first gateway device in the plurality of gateways included in the target gateway list, a gateway as the target gateway includes the following step.

If the plurality of gateways included in the target gateway list include a current gateway serving the UE and the current gateway satisfies a service requirement of the target service, the first gateway device determines the current gateway as the target gateway. Therefore, in a manner of determining the current gateway as the target gateway, network handover can be reduced, and then processing delay for the target service is reduced.

With reference to the second possible implementation of the first aspect of the embodiments of the present invention, in a fourth possible implementation of the first aspect of the embodiments of the present invention, the determining, by the first gateway device in the plurality of gateways included in the target gateway list, a gateway as the target gateway includes the following step.

If the plurality of gateways included in the target gateway list include a current gateway serving the UE and the current gateway does not satisfy a service requirement of the target service, the first gateway device determines, in the plurality of gateways included in the target gateway list, a gateway other than the current gateway as the target gateway; or
if the plurality of gateways included in the target gateway list do not include a current gateway serving the UE, the first gateway device determines, in the plurality of gateways included in the target gateway list, a gateway as the target gateway.

The target gateway selected by the first gateway device may be a gateway at a preferable location. Therefore, the processing delay for the target service can be reduced.

With reference to the fourth possible implementation of the first aspect of the embodiments of the present invention, in a fifth possible implementation of the first aspect of the embodiments of the present invention, the performing, by the first gateway device, a bearer processing operation, so as to obtain a target bearer corresponding to the target service includes the following step.

When the target gateway is not the current gateway serving the UE, the first gateway device performs a bearer creation process, so as to obtain the target bearer.

With reference to the first aspect of the embodiments of the present invention or the first possible implementation of the first aspect of the embodiments of the present invention, in a sixth possible implementation of the first aspect of the embodiments of the present invention, the performing, by the first gateway device, a bearer processing operation, so as to obtain a target bearer corresponding to the target service includes the following step.

The first gateway device performs a bearer creation process, so as to obtain the target bearer; or
the first gateway device performs a bearer modification process, so as to obtain the target bearer.

With reference to the sixth possible implementation of the first aspect of the embodiments of the present invention, in a seventh possible implementation of the first aspect of the embodiments of the present invention, the performing, by the first gateway device, a bearer creation process, so as to obtain the target bearer includes the following step.

If quality of service class identifier QCI information of the target service is inconsistent with QCI information of each of all bearers of the UE, the first gateway device performs the bearer creation process, so as to obtain the target bearer;
if QCI information of the target service is consistent with QCI information of a first bearer of the UE and a gateway to which the first bearer is anchored is incapable of serving the target service, the first gateway device performs the bearer creation process, so as to obtain the target bearer; or
if the network in which the target service is located is an independent network, the first gateway device performs the bearer creation process, so as to obtain the target bearer. When the network in which the target service is located is an independent network, the first gateway device directly performs the bearer creation process, QCI information does not need to be determined again, processing is simple, and the target bearer can be rapidly obtained.

With reference to the sixth possible implementation of the first aspect of the embodiments of the present invention, in an eighth possible implementation of the first aspect of the embodiments of the present invention, the performing, by the first gateway device, a bearer modification process, so as to obtain the target bearer includes the following step.

If quality of service class identifier QCI information of the target service is consistent with QCI information of a second bearer of the UE and a gateway to which the second bearer is anchored is capable of serving the target service, the first gateway device performs the bearer modification process, so as to obtain the target bearer. Therefore, no new bearer needs to be created, so as to save bearer resources.

With reference to the first aspect of the embodiments of the present invention or the first possible implementation of the first aspect of the embodiments of the present invention, in a ninth possible implementation of the first aspect of the embodiments of the present invention, the anchoring, by the first gateway device, the target bearer to a target gateway includes the following step.

The first gateway device sends information corresponding to the target bearer to the target gateway, so as to anchor the target bearer to the target gateway, where the information corresponding to the target bearer is used to implement the service flow transmission between the UE and the network that corresponds to the target service.

With reference to the ninth possible implementation of the first aspect of the embodiments of the present invention, in a tenth possible implementation of the first aspect of the embodiments of the present invention, the information corresponding to the target bearer includes S1_U interface serving gateway fully qualified tunnel endpoint identifier SGW F-TEID information, and the S1_U interface SGW F-TEID information is used to instruct the target gateway to receive an uplink service flow that matches the S1_U interface SGW F-TEID information and that is sent by the UE;
the information corresponding to the target bearer includes traffic flow template TFT information, and the TFT information is used to instruct the target gateway to receive a downlink service flow that needs to be sent to the UE and that matches the TFT information; or
the information corresponding to the target bearer includes S1-U interface evolved NodeB eNB F-TEID information, and the S1-U interface eNB F-TEID information is used to instruct the target gateway to send, to an eNB according to the S1-U interface eNB F-TEID information, a received downlink service flow that needs to be sent to the UE.

With reference to any one of the first aspect of the embodiments of the present invention, or the first possible implementation of the first aspect of the embodiments of the present invention to the tenth possible implementation of the first aspect of the embodiments of the present invention, in an eleventh possible implementation of the first aspect of the embodiments of the present invention, the determining, by a first gateway device, a target service currently performed by user equipment UE includes the following steps.

The first gateway device receives a service request message sent by the UE, where the service request message includes packet characteristic information.

The first gateway device determines the target service according to the packet characteristic information.

In the optional implementation, the first gateway device may be a gateway control plane (GW_C, Gateway Controller), and the target gateway is a gateway forwarding plane (GW_U, Gateway User) (that is, New_GW_U); or the first gateway device may be a remote gateway (R_GW, Remote Gateway), and the target gateway may be a local gateway (L_GW, Local Gateway).

With reference to any one of the first aspect of the embodiments of the present invention, or the first possible implementation of the first aspect of the embodiments of the present invention to the tenth possible implementation of the first aspect of the embodiments of the present invention, in a twelfth possible implementation of the first aspect of the embodiments of the present invention, the determining, by a first gateway device, a target service currently performed by user equipment UE includes the following steps.

The first gateway device receives a session modification request message sent by a policy and charging rules function PCRF entity, where the session modification request message includes packet characteristic information.

The first gateway device determines the target service according to the packet characteristic information.

In the optional implementation, the first gateway device may be a GW_C, and the target gateway is a GW_U; or the first gateway device may be an R_GW, and the target gateway may be an L_GW.

With reference to any one of the first aspect of the embodiments of the present invention, or the first possible implementation of the first aspect of the embodiments of the present invention to the tenth possible implementation of the first aspect of the embodiments of the present invention, in a thirteenth possible implementation of the first aspect of the embodiments of the present invention, the determining, by a first gateway device, a target service currently performed by user equipment UE includes the following steps.

The first gateway device receives an event reported by a second gateway device, where the event is reported by the second gateway device when detecting that a service packet received by the second gateway device satisfies a preset condition.

The first gateway device determines the target service according to the event.

In the optional implementation, the event reported by the second gateway device may be actively reported by the second gateway device, or may be reported by the second gateway device under subscription of the first gateway device. The first gateway device may be a GW_C, the second gateway device may be a GW_U (that is, Old_GW_U) to which a default bearer is anchored, and the target gateway is a GW_U (that is, New_GW_U).

According to a second aspect of the embodiments of the present invention, a service flow transmission apparatus is disclosed. The apparatus includes a determining module, a bearer processing module, a binding module, an anchoring module, and a transmission module.

The determining module is configured to determine a target service currently performed by user equipment UE, where the target service may be a service of accessing a website, a call service, an instant messaging service, or the like.

The bearer processing module is configured to perform a bearer processing operation, so as to obtain a target bearer corresponding to the target service, where the bearer processing operation may include a bearer creation process or a bearer modification process.

The binding module is configured to bind a service flow of the target service to the target bearer.

The anchoring module is configured to anchor the target bearer to a target gateway, where the anchoring, by the anchoring module, the target bearer to a target gateway is sending context information of the target bearer to the target gateway.

The transmission module is configured to implement, by using the target gateway, service flow transmission between the UE and a network that corresponds to the target service.

In the implementation, flexible service flow deployment is implemented in a manner of binding the service flow to the target bearer obtained by performing the bearer processing operation, and anchoring the target bearer to the target gateway.

In a first possible implementation of the second aspect of the embodiments of the present invention, the apparatus further includes a selection module.

The selection module is configured to select the target gateway for the target service according to a correspondence between a service and gateway deployment. In a manner of selecting the target gateway according to the correspondence between a service and gateway deployment, different target gateways can be selected for service flows that have same APN information, and then the service flows that have the same APN information access different PDN networks, so as to implement flexible service flow deployment in the PDN networks.

With reference to the first possible implementation of the second aspect of the embodiments of the present invention, in a second possible implementation of the second aspect of the embodiments of the present invention, the selection module includes a first determining sub-module and a second determining sub-module.

The first determining sub-module is configured to determine, according to the correspondence between a service and gateway deployment, a list of target gateways capable of serving the UE, where the target gateway list includes a plurality of gateways capable of serving the UE. Therefore, an appropriate gateway (such as a gateway at a preferable location) can be selected, according to an actual requirement of the target service, as the target gateway from the plurality of gateways included in the target gateway list.

The second determining sub-module is configured to determine, in the plurality of gateways included in the target gateway list, a gateway as the target gateway.

With reference to the second possible implementation of the second aspect of the embodiments of the present invention, in a third possible implementation of the second aspect of the embodiments of the present invention, a specific manner in which the second determining sub-module determines, in the plurality of gateways included in the target gateway list, a gateway as the target gateway is as follows:
If the plurality of gateways included in the target gateway list include a current gateway serving the UE and the current gateway satisfies a service requirement of the target service, the current gateway is determined as the target gateway. Therefore, in a manner of determining the current gateway as the target gateway, network handover can be reduced, and then processing delay for the target service is reduced.

With reference to the second possible implementation of the second aspect of the embodiments of the present invention, in a fourth possible implementation of the second aspect of the embodiments of the present invention, a specific manner in which the second determining sub-module determines, in the plurality of gateways included in the target gateway list, a gateway as the target gateway is as follows:
If the plurality of gateways included in the target gateway list include a current gateway serving the UE and the current gateway does not satisfy a service requirement of the target service, a gateway other than the current gateway is determined, in the plurality of gateways included in the target gateway list, as the target gateway; or
if the plurality of gateways included in the target gateway list do not include a current gateway serving the UE, a gateway is determined, in the plurality of gateways included in the target gateway list, as the target gateway.

The target gateway determined by the second determining sub-module may be a gateway at a preferable location. Therefore, the processing delay for the target service can be reduced.

With reference to the fourth possible implementation of the second aspect of the embodiments of the present invention, in a fifth possible implementation of the second aspect of the embodiments of the present invention, a specific manner in which the bearer processing module performs a bearer processing operation, so as to obtain a target bearer corresponding to the target service is as follows:
When the target gateway is not the current gateway serving the UE, a bearer creation process is performed, so as to obtain the target bearer.

With reference to the second aspect of the embodiments of the present invention or the first possible implementation of the second aspect of the embodiments of the present invention, in a sixth possible implementation of the second aspect of the embodiments of the present invention, a specific manner in which the bearer processing module performs a bearer processing operation, so as to obtain a target bearer corresponding to the target service is as follows:
A bearer creation process is performed, so as to obtain the target bearer; or
a bearer modification process is performed, so as to obtain the target bearer.

With reference to the sixth possible implementation of the second aspect of the embodiments of the present invention, in a seventh possible implementation of the second aspect of the embodiments of the present invention, a specific manner in which the bearer processing module performs a bearer creation process, so as to obtain the target bearer is as follows:
If quality of service class identifier QCI information of the target service is inconsistent with QCI information of each of all bearers of the UE, the bearer creation process is performed, so as to obtain the target bearer;
if QCI information of the target service is consistent with QCI information of a first bearer of the UE and a gateway to which the first bearer is anchored is incapable of serving the target service, the bearer creation process is performed, so as to obtain the target bearer; or
if the network in which the target service is located is an independent network, the bearer creation process is performed, so as to obtain the target bearer. When the network in which the target service is located is an independent network, the bearer processing module may directly perform the bearer creation process, QCI information does not need to be determined again, processing is simple, and the target bearer can be rapidly obtained.

With reference to the sixth possible implementation of the second aspect of the embodiments of the present invention, in an eighth possible implementation of the second aspect of the embodiments of the present invention, a specific manner in which the bearer processing module performs a bearer modification process, so as to obtain the target bearer is as follows:
If quality of service class identifier QCI information of the target service is consistent with QCI information of a second bearer of the UE and a gateway to which the second bearer is anchored is capable of serving the target service, the bearer modification process is performed, so as to obtain the target bearer. Therefore, no new bearer needs to be created, so as to save bearer resources.

With reference to the second aspect of the embodiments of the present invention or the first possible implementation of the second aspect of the embodiments of the present invention, in a ninth possible implementation of the second aspect of the embodiments of the present invention, a specific manner in which the anchoring module anchors the target bearer to a target gateway is as follows:
Information corresponding to the target bearer is sent to the target gateway, where the information corresponding to the target bearer is used to implement the service flow transmission between the UE and the network that corresponds to the target service.

With reference to the ninth possible implementation of the second aspect of the embodiments of the present invention, in a tenth possible implementation of the second aspect of the embodiments of the present invention, the information corresponding to the target bearer includes S1_U interface serving gateway fully qualified tunnel endpoint identifier SGW F-TEID information, and the S1_U interface SGW F-TEID information is used to instruct the target gateway to receive an uplink service flow that matches the S1_U interface SGW F-TEID information and that is sent by the UE;
the information corresponding to the target bearer includes traffic flow template TFT information, and the TFT information is used to instruct the target gateway to receive a downlink service flow that needs to be sent to the UE and that matches the TFT information; or
the information corresponding to the target bearer includes S1-U interface evolved NodeB eNB F-TEID information, and the S1-U interface eNB F-TEID information is used to instruct the target gateway to send, to an eNB according to the S1-U interface eNB F-TEID information, a received downlink service flow that needs to be sent to the UE.

With reference to any one of the second aspect of the embodiments of the present invention, or the first possible implementation of the second aspect of the embodiments of the present invention to the tenth possible implementation of the second aspect of the embodiments of the present invention, in an eleventh possible implementation of the second aspect of the embodiments of the present invention, a specific manner in which the determining module determines a target service currently performed by user equipment UE is as follows:
A service request message sent by the UE is received, where the service request message includes packet characteristic information; and
the target service is determined according to the packet characteristic information.

With reference to any one of the second aspect of the embodiments of the present invention, or the first possible implementation of the second aspect of the embodiments of the present invention to the tenth possible implementation of the second aspect of the embodiments of the present invention, in a twelfth possible implementation of the second aspect of the embodiments of the present invention, a specific manner in which the determining module determines a target service currently performed by user equipment UE is as follows:
A session modification request message sent by a policy and charging rules function PCRF entity is received, where the session modification request message includes packet characteristic information; and
the target service is determined according to the packet characteristic information.

With reference to any one of the second aspect of the embodiments of the present invention, or the first possible implementation of the second aspect of the embodiments of the present invention to the tenth possible implementation of the second aspect of the embodiments of the present invention, in a thirteenth possible implementation of the second aspect of the embodiments of the present invention, a specific manner in which the determining module determines a target service currently performed by user equipment UE is as follows:
An event reported by a second gateway device is received, where the event is reported by the second gateway device when detecting that a service packet received by the second gateway device satisfies a preset condition; and
the target service is determined according to the event.

According to a third aspect of the embodiments of the present invention, a service flow transmission apparatus is disclosed, including a processor, a memory, and a communications interface. The memory stores a set of program code, and the processor is configured to invoke the program code stored in the memory, and is configured to perform the following operations.

A target service currently performed by user equipment UE is determined, a bearer processing operation is performed, so as to obtain a target bearer corresponding to the target service, a service flow of the target service is bound to the target bearer, and the target bearer is anchored to a target gateway, where the target service may be a service of accessing a website, a call service, an instant messaging service, or the like. The bearer processing operation may include a bearer creation process or a bearer modification process, and the anchoring the target bearer to a target gateway is sending context information of the target bearer to the target gateway. Therefore, flexible service flow deployment is implemented in a manner of binding the service flow to the target bearer obtained by performing the bearer processing operation, and anchoring the target bearer to the target gateway.

The communications interface is configured to implement, by using the target gateway, service flow transmission between the UE and a network that corresponds to the target service.

In a first possible implementation of the third aspect of the embodiments of the present invention, the processor is configured to invoke the program code stored in the memory, and is further configured to perform the following operation.

The target gateway is selected for the target service according to a correspondence between a service and gateway deployment. In a manner of selecting the target gateway according to the correspondence between a service and gateway deployment, different target gateways can be selected for service flows that have same APN information, and then the service flows that have the same APN information access different PDN networks, so as to implement flexible service flow deployment in the PDN networks.

With reference to the first possible implementation of the third aspect of the embodiments of the present invention, in a second possible implementation of the third aspect of the embodiments of the present invention, a specific manner in which the processor selects the target gateway for the target service according to the correspondence between a service and gateway deployment is as follows:
A list of target gateways capable of serving the UE is determined according to the correspondence between a service and gateway deployment, where the target gateway list includes a plurality of gateways capable of serving the UE. Therefore, the first gateway device can select, according to an actual requirement of the target service, an appropriate gateway (such as a gateway at a preferable location) as the target gateway from the plurality of gateways included in the target gateway list.

A gateway is determined, in the plurality of gateways included in the target gateway list, as the target gateway.

With reference to the second possible implementation of the third aspect of the embodiments of the present invention, in a third possible implementation of the third aspect of the embodiments of the present invention, a specific manner in which the processor determines, in the plurality of gateways included in the target gateway list, a gateway as the target gateway is as follows:
If the plurality of gateways included in the target gateway list include a current gateway serving the UE and the current gateway satisfies a service requirement of the target service, the current gateway is determined as the target gateway. Therefore, in a manner of determining the current gateway as the target gateway, network handover can be reduced, and then processing delay for the target service is reduced.

With reference to the second possible implementation of the third aspect of the embodiments of the present invention, in a fourth possible implementation of the third aspect of the embodiments of the present invention, a specific manner in which the processor determines, in the plurality of gateways included in the target gateway list, a gateway as the target gateway is as follows:
If the plurality of gateways included in the target gateway list include a current gateway serving the UE and the current gateway does not satisfy a service requirement of the target service, a gateway other than the current gateway is determined, in the plurality of gateways included in the target gateway list, as the target gateway; or
if the plurality of gateways included in the target gateway list do not include a current gateway serving the UE, a gateway is determined, in the plurality of gateways included in the target gateway list, as the target gateway.

The target gateway determined by the processor may be a gateway at a preferable location. Therefore, the processing delay for the target service can be reduced.

With reference to the fourth possible implementation of the third aspect of the embodiments of the present invention, in a fifth possible implementation of the third aspect of the embodiments of the present invention, a specific manner in which the processor performs a bearer processing operation, so as to obtain a target bearer corresponding to the target service is as follows:
When the target gateway is not the current gateway serving the UE, a bearer creation process is performed, so as to obtain the target bearer.

With reference to the third aspect of the embodiments of the present invention or the first possible implementation of the third aspect of the embodiments of the present invention, in a sixth possible implementation of the third aspect of the embodiments of the present invention, a specific manner in which the processor performs a bearer processing operation, so as to obtain a target bearer corresponding to the target service is as follows:
A bearer creation process is performed, so as to obtain the target bearer; or
a bearer modification process is performed, so as to obtain the target bearer.

With reference to the sixth possible implementation of the third aspect of the embodiments of the present invention, in a seventh possible implementation of the third aspect of the embodiments of the present invention, a specific manner in which the processor performs a bearer creation process, so as to obtain the target bearer is as follows:
If quality of service class identifier QCI information of the target service is inconsistent with QCI information of each of all bearers of the UE, the bearer creation process is performed, so as to obtain the target bearer;
if QCI information of the target service is consistent with QCI information of a first bearer of the UE and a gateway to which the first bearer is anchored is incapable of serving the target service, the bearer creation process is performed, so as to obtain the target bearer; or
if the network in which the target service is located is an independent network, the bearer creation process is performed, so as to obtain the target bearer. When the network in which the target service is located is an independent network, the processor directly performs the bearer creation process, QCI information does not need to be determined again, processing is simple, and the target bearer can be rapidly obtained.

With reference to the sixth possible implementation of the third aspect of the embodiments of the present invention, in an eighth possible implementation of the third aspect of the embodiments of the present invention, a specific manner in which the processor performs a bearer modification process, so as to obtain the target bearer is as follows:
If quality of service class identifier QCI information of the target service is consistent with QCI information of a second bearer of the UE and a gateway to which the second bearer is anchored is capable of serving the target service, the bearer modification process is performed, so as to obtain the target bearer. Therefore, no new bearer needs to be created, so as to save bearer resources.

With reference to the third aspect of the embodiments of the present invention or the first possible implementation of the third aspect of the embodiments of the present invention, in a ninth possible implementation of the third aspect of the embodiments of the present invention, a specific manner in which the processor anchors the target bearer to a target gateway is as follows:
Information corresponding to the target bearer is sent to the target gateway, so as to anchor the target bearer to the target gateway, where the information corresponding to the target bearer is used to implement the service flow transmission between the UE and the network that corresponds to the target service.

With reference to the ninth possible implementation of the third aspect of the embodiments of the present invention, in a tenth possible implementation of the third aspect of the embodiments of the present invention, the information corresponding to the target bearer includes S1_U interface serving gateway fully qualified tunnel endpoint identifier SGW F-TEID information, and the S1_U interface SGW F-TEID information is used to instruct the target gateway to receive an uplink service flow that matches the S1_U interface SGW F-TEID information and that is sent by the UE;
the information corresponding to the target bearer includes traffic flow template TFT information, and the TFT information is used to instruct the target gateway to receive a downlink service flow that needs to be sent to the UE and that matches the TFT information; or
the information corresponding to the target bearer includes S1-U interface evolved NodeB eNB F-TEID information, and the S1-U interface eNB F-TEID information is used to instruct the target gateway to send, to an eNB according to the S1-U interface eNB F-TEID information, a received downlink service flow that needs to be sent to the UE.

With reference to any one of the third aspect of the embodiments of the present invention, or the first possible implementation of the third aspect of the embodiments of the present invention to the tenth possible implementation of the third aspect of the embodiments of the present invention, in an eleventh possible implementation of the third aspect of the embodiments of the present invention, a specific manner in which the processor determines a target service currently performed by UE is as follows:
A service request message sent by the UE is received, where the service request message includes packet characteristic information; and
the target service is determined according to the packet characteristic information.

With reference to any one of the third aspect of the embodiments of the present invention, or the first possible implementation of the third aspect of the embodiments of the present invention to the tenth possible implementation of the third aspect of the embodiments of the present invention, in a twelfth possible implementation of the third aspect of the embodiments of the present invention, a specific manner in which the processor determines a target service currently performed by UE is as follows:
A session modification request message sent by a policy and charging rules function PCRF entity is received, where the session modification request message includes packet characteristic information; and
the target service is determined according to the packet characteristic information.

With reference to any one of the third aspect of the embodiments of the present invention, or the first possible implementation of the third aspect of the embodiments of the present invention to the tenth possible implementation of the third aspect of the embodiments of the present invention, in a thirteenth possible implementation of the third aspect of the embodiments of the present invention, a specific manner in which the processor determines a target service currently performed by UE is as follows:
An event reported by a second gateway device is received, where the event is reported by the second gateway device when detecting that a service packet received by the second gateway device satisfies a preset condition; and
the target service is determined according to the event.

In the embodiments of the present invention, the first gateway device determines the target service currently performed by the UE, performs the bearer processing operation, so as to obtain the target bearer corresponding to the target service, and binds the service flow of the target service to the target bearer; and the first gateway device anchors the target bearer to the target gateway, and implements, by using the target gateway, the service flow transmission between the UE and the network that corresponds to the target service. It can be learned that, in the embodiments of the present invention, a service flow can be bound to one new bearer and the new bearer is anchored to an appropriate gateway, so as to anchoring different bearers of a same PDN connection to different gateways, thereby implementing flexible service flow deployment, and improving service flow deployment flexibility.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a network architecture of an EPS disclosed in the prior art;
FIG. 2 is a schematic diagram of network deployment of an EPS disclosed in the prior art;
FIG. 3 is a schematic flowchart of a service flow transmission method according to an embodiment of the present invention;
FIG. 4 is a schematic flowchart of another service flow transmission method according to an embodiment of the present invention;
FIG. 5 is a schematic flowchart of still another service flow transmission method according to an embodiment of the present invention;
FIG. 6 is a schematic flowchart of still another service flow transmission method according to an embodiment of the present invention;
FIG. 7 is a schematic diagram of an effect according to an embodiment of the present invention;
FIG. 8 is a schematic structural diagram of a service flow transmission apparatus according to an embodiment of the present invention;
FIG. 9 is a schematic structural diagram of another service flow transmission apparatus according to an embodiment of the present invention;
FIG. 10 is a schematic structural diagram of still another service flow transmission apparatus according to an embodiment of the present invention; and
FIG. 11 is a schematic structural diagram of still another service flow transmission apparatus according to an embodiment of the present invention.

### DESCRIPTION OF EMBODIMENTS

The following clearly and implemently describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention disclose a service flow transmission method and apparatus, so as to improve service flow deployment flexibility in a manner of anchoring different bearers of a same PDN connection to different gateways. Detailed descriptions are separately performed below.

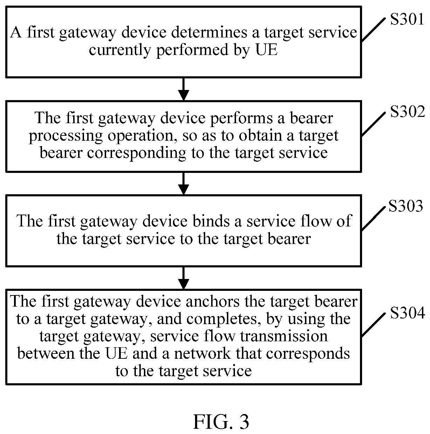

Referring to FIG. 3, FIG. 3 is a schematic flowchart of a service flow transmission method according to an embodiment of the present invention. The method shown in FIG. 3 may be applied to the EPS network architecture shown in FIG. 1. As shown in FIG. 3, the method may include the following steps.

S301. A first gateway device determines a target service currently performed by UE.

S302. The first gateway device performs a bearer processing operation, so as to obtain a target bearer corresponding to the target service.

In this embodiment of the present invention, the first gateway device obtains different bearers for different services, and the different bearers are configured to anchor to different gateways.

S303. The first gateway device binds a service flow of the target service to the target bearer.

S304. The first gateway device anchors the target bearer to a target gateway, and implements, by using the target gateway, service flow transmission between the UE and a network that corresponds to the target service.

In this embodiment of the present invention, a service flow can be bound to a bearer obtained after performing a bearer operation and the bearer is anchored to an appropriate gateway (that is, the target gateway), thereby implementing flexible service flow deployment, and improving service flow deployment flexibility.

In an optional embodiment, the service flow transmission method may further include the following step.

The first gateway device selects the target gateway for the target service according to a correspondence between a service and gateway deployment.

In the optional embodiment, in a manner of selecting the target gateway according to the correspondence between a service and gateway deployment, different target gateways can be selected for service flows that have same APN information, and then the service flows that have the same APN information access different PDN networks, so as to implement flexible service flow deployment in the PDN networks.

In the optional embodiment, the first gateway device may select the target gateway according to the correspondence between a service and gateway deployment after step S301 and before step S302. In this case, the performing, by the first gateway device, a bearer processing operation may be performing a bearer creation process or a bearer modification process according to a target service, so as to obtain a target bearer corresponding to the target service. Alternatively, the first gateway device may select the target gateway according to the correspondence between a service and gateway deployment after step S302 and before step S303 or after step S303 and before step S304. This is not limited in this embodiment of the present invention. In this case, the performing, by the first gateway device, a bearer processing operation may be performing a bearer creation process, so as to obtain a target bearer corresponding to the target service. Moreover, after the first gateway device determines the target bearer corresponding to the target service and a target gateway, the target bearer is anchored to the target gateway, that is, the first gateway device anchors the target bearer to the target gateway.

In an optional implementation of the optional embodiment, the selecting, by the first gateway device, the target gateway for the target service according to a correspondence between a service and gateway deployment may include the following steps.

The first gateway device determines, according to the correspondence between a service and gateway deployment, a list of target gateways capable of serving the UE, where the target gateway list includes a plurality of (that is, at least one) gateways capable of serving the UE.

The first gateway device determines, in the plurality of gateways included in the determined target gateway list, a gateway as the target gateway selected by the first gateway device for the target service.

In the optional implementation, further optionally, a specific manner in which the first gateway device determines, in the plurality of gateways included in the determined target gateway list, a gateway as the target gateway selected by the first gateway device for the target service may be as follows:
If the plurality of gateways included in the target gateway list include a current gateway serving the UE and the current gateway satisfies a service requirement of the target service, the first gateway device determines the current gateway as the target gateway selected by the first gateway device for the target service. Therefore, in a manner of determining the current gateway as the target gateway, network handover can be reduced, and then processing delay for the target service is reduced.

In the optional manner, further optionally, a specific manner in which the first gateway device determines, in the plurality of gateways included in the determined target gateway list, a gateway as the target gateway selected by the first gateway device for the target service may be as follows:
If the plurality of gateways included in the target gateway list include a current gateway serving the UE and the current gateway does not satisfy a service requirement of the target service, the first gateway device determines, in the plurality of gateways included in the target gateway list, a gateway other than the current gateway as the target gateway selected by the first gateway device for the target service; or
if the plurality of gateways included in the target gateway list do not include a current gateway serving the UE, the first gateway device determines, in the plurality of gateways included in the target gateway list, a gateway as the target gateway selected by the first gateway device for the target service.

In the optional embodiment, the target gateway selected by the first gateway device for the target service may be a gateway at a preferable location. Therefore, the processing delay for the target service can be reduced.

In the optional manner, still further optionally, the performing, by the first gateway device, a bearer processing operation, so as to obtain a target bearer corresponding to the target service may include the following step.

When the target gateway is not the current gateway serving the UE, the first gateway device performs a bearer creation process, so as to obtain the target bearer.

In another optional embodiment, the anchoring, by the first gateway device, the target bearer to a target gateway may include the following step.

The first gateway device sends information corresponding to the target bearer to the target gateway, so as to anchor the target bearer to the target gateway, where the information corresponding to the target bearer is used to implement the service flow transmission between the UE and the network that corresponds to the target service.

Optionally, the information corresponding to the target bearer may include S1_U interface serving gateway fully qualified tunnel endpoint identifier (SGW F-TEID, Service Gateway Full Qualified Tunnel Endpoint Identifier) information, where the S1_U interface SGW F-TEID information is used to instruct the target gateway to receive an uplink service flow that matches the S1_U interface SGW F-TEID information and that is sent by the UE; the information corresponding to the target bearer includes traffic flow template (TFT, Traffic flow template) information, and the TFT information is used to instruct the target gateway to receive a downlink service flow that needs to be sent to the UE and that matches the TFT information; or the information corresponding to the target bearer may include S1-U interface eNB F-TEID information, and the S1-U interface eNB F-TEID information is used to instruct the target gateway to send, to an eNB according to the S1-U interface eNB F-TEID information, a received downlink service flow that needs to be sent to the UE.

In another optional embodiment, the performing, by the first gateway device, a bearer processing operation, so as to obtain a target bearer corresponding to the target service may include the following step.

The first gateway device performs a bearer creation process, so as to obtain the target bearer; or
the first gateway device performs a bearer modification process, so as to obtain the target bearer.

Optionally, the performing, by the first gateway device, a bearer creation process, so as to obtain a target bearer corresponding to the target service may include the following step.

If quality of service class identifier (QCI, QoS Class Identifier) information of the target service is inconsistent with QCI information of each of all bearers of the UE, the first gateway device performs the bearer creation process, so as to obtain the target bearer;
if QCI information of the target service is consistent with QCI information of a first bearer of the UE and a gateway to which the first bearer is anchored is incapable of serving the target service, the first gateway device performs the bearer creation process, so as to obtain the target bearer, where the first bearer is one of all bearers of the UE; or
according to a particular configuration, when the network in which the target service is located is an independent network (that is, the network in which the target service is located is isolated from a network in which another service is located), for example, when the network in which the target service is located is a virtual private network (VPN, Virtual Private Network), the first gateway device performs the bearer creation process, so as to obtain the target bearer. That is, when the network in which the target service is located is an independent network, the first gateway device directly performs the bearer creation process, QCI information does not need to be determined again, processing is simple, and the target bearer can be rapidly obtained.

Optionally, the performing, by the first gateway device, a bearer modification process, so as to obtain a target bearer corresponding to the target service may include the following step.

If QCI information of the target service is consistent with QCI information of a second bearer of the UE and a gateway to which the second bearer is anchored is capable of serving the target service, the first gateway device performs the bearer modification process, so as to obtain the target bearer. Therefore, no new bearer needs to be created, so as to save bearer resources.

In an optional embodiment, the determining, by a first gateway device, a target service currently performed by UE may include the following steps.

The first gateway device receives a service request message sent by the UE, where the service request message may include packet characteristic information such as traffic flow template (TFT, Traffic flow template) information, packet filtering information, or 5-tuple information; and
the first gateway device determines, according to the packet characteristic information in the service request message, the target service currently performed by the UE.

In the optional embodiment, the first gateway device may be a gateway control plane (GW_C, Gateway Controller), and the target gateway in step S304 is a gateway forwarding plane (GW_U, Gateway User) (that is, New_GW_U), that is, an application architecture of the optional embodiment is an application architecture of "GW_C + GW_U "; or the first gateway device may be a remote gateway (R_GW, Remote Gateway), and the target gateway in step S304 may be a local gateway (L_GW, Local Gateway), that is, an application architecture of the optional embodiment is an application architecture of "R_GW+L_GW".

In another optional embodiment, the determining, by a first gateway device, a target service currently performed by UE may include the following steps.

The first gateway device receives a session modification request message sent by a policy and charging rules function (PCRF, Policy and Charging Rules Function) entity, where the session modification request message may include packet characteristic information such as TFT information, packet filtering information, or 5-tuple information; and
the first gateway device determines, according to the packet characteristic information in the session modification request message, the target service currently performed by the UE.

In the optional embodiment, the first gateway device may be a gateway control plane GW_C, and the target gateway in step S304 is a GW_U (that is, New_GW_U), that is, an application architecture of the optional embodiment is an application architecture of "GW_C + GW_U "; or the first gateway device may be a remote gateway R_GW, and the target gateway in step S304 may be a local gateway L_GW, that is, an application architecture of the optional embodiment is an application architecture of "R_GW+L_GW".

In still another optional embodiment, the determining, by a first gateway device, a target service currently performed by UE may include the following steps.

The first gateway device receives an event reported by a second gateway device, where the event is reported to the first gateway device by the second gateway device when detecting that a service packet received by the second gateway device satisfies a preset condition; and
the first gateway device determines, according to the event reported by the second gateway device, the target service currently performed by the UE.

In the optional embodiment, the event reported by the second gateway device may be actively reported by the second gateway device, that is, after the second gateway device receives the service packet sent by the UE, the second gateway device actively detects the service packet. When the service packet conforms to a preset service rule, the second gateway device actively reports the event, and the first gateway device determines, according to the event, the target service currently performed by the UE. For example, assuming that the service packet that is sent by the UE and that is received by the second gateway device is a domain name system (DNS, Domain Name System) packet including target information that the UE needs to access (such as a target domain name that the UE needs to access), the second gateway device actively reports an event to the first gateway device, where the event includes packet characteristic information of the DNS packet, and the first gateway device may determine, according to the packet characteristic information of the DNS packet, the target service currently performed by the UE.

In the optional embodiment, the event reported by the second gateway device may be passively reported by the second gateway device, that is, the first gateway device subscribes to the event from the second gateway device in advance, so as to trigger the second gateway device to identify, after receiving the service packet sent by the UE, the service packet and report the event to the first gateway device when the service packet satisfies an event requirement, where the event that is subscribed to may be service-packet-based L3/L4 information, L7 layer protocol information, L7 layer content information, or the like. This is not limited in this embodiment of the present invention.

In the optional embodiment, the first gateway device may be a GW_C, the second gateway device may be a GW_U (that is, Old_GW_U) to which a default bearer is anchored, the target gateway in step 304 is a GW_U (that is, New_GW_U), that is, an application architecture of the optional embodiment is an application architecture of "GW_C +Old_GW _U +New_GW_U".

It should be noted that, in this embodiment of the present invention, the target gateway should be close to a service server as much as possible, that is, a gateway whose service path is preferable may be considered as an appropriate target gateway.

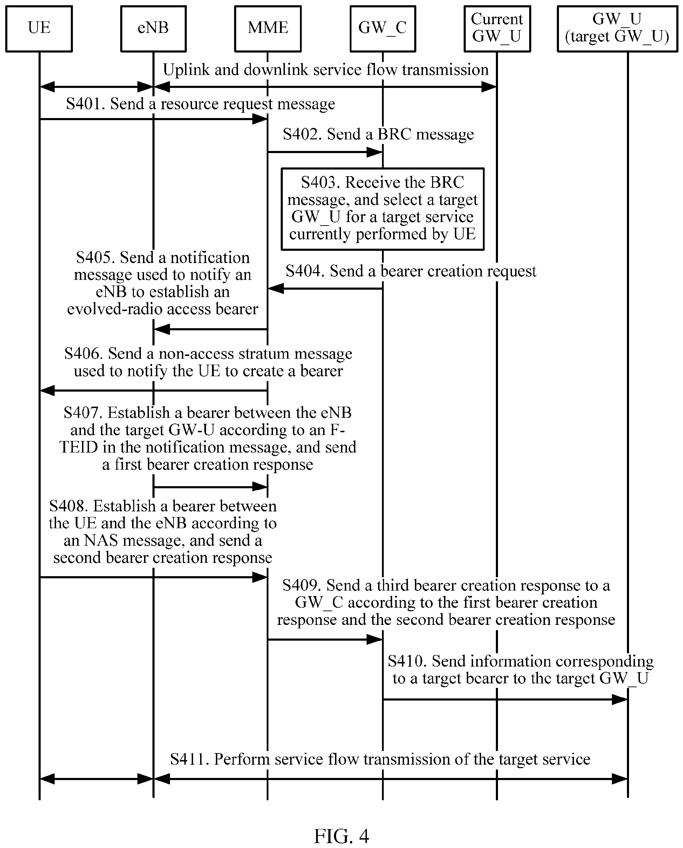

Referring to FIG. 4, FIG. 4 is a schematic flowchart of a service flow transmission method according to another embodiment of the present invention. FIG. 4 is a schematic flowchart of a service flow transmission method when a first gateway device determines, according to packet characteristic information in a service request message sent by UE, a target service currently performed by the UE, and the first gateway device is a GW_C. Uplink and downlink transmission is performed on a data flow of the UE between an eNB and a current GW_U (that is, Old_GW_U). As shown in FIG. 4, the service flow transmission method may include the following steps.

S401. The UE sends a resource request message to an MME.

The resource request message carries packet characteristic information such as TFT information, packet filtering information, or 5-tuple information of a packet. Optionally, the resource request message may further carry quality of service (QoS, Quality of Service) information corresponding to the packet, such as QCI information and/or guaranteed bit rate (GBR, Guaranteed Bit Rate) information required by the UE. This is not limited in this embodiment of the present invention.

S402. The MME sends a bearer resource command (BRC, Bearer Resource Command) message to the GW_C.

The BRC message carries the resource request message.

S403. The GW_C receives the BRC message, and selects a target GW_U for a target service currently performed by the UE.

In this embodiment of the present invention, the target GW_U selected by the GW_C for the target service currently performed by the UE is a GW_U that has a relatively optimized service path and that is close to a service server as much as possible, and an implementation of the target GW_U selected by the GW_C for the target service currently performed by the UE is as follows: The target service currently performed by the UE is identified after the BRC message is received, and an appropriate target GW_U is selected for the target service currently performed by the UE according to a correspondence between a service and gateway deployment. A more specific implementation is as follows:
After receiving the BRC message, the GW_C identifies, according to the packet characteristic information in the resource request message included in the BRC message, the target service currently performed by the UE, for example, identifies, according to target address information, a specific website that the UE currently needs to access;
after determining the target service, the GW_C performs service rule matching, and confirms a service policy, where the service policy is used to provide a basis on which the target GW_U is selected, for example, a gateway close to the service server as much as possible is selected, that is, enabling of a local service breakout or enabling local breakout (LBO, Local Breakout) characteristic is required; and
the GW_C confirms, according to a correspondence between a service and gateway deployment, a list of GW_Us capable of serving the target service, and selects, from the plurality of GW_Us included in the GW_U list, a GW_U at a preferable location as the target GW_U, where the GW_U list may include a plurality of GW_Us capable of serving the target service, and the correspondence between a service and gateway deployment may be statically configured, or may be delivered by an operation management (OM, Operation Management) system to the GW_C, and this is not limited in this embodiment of the present invention.

It should be noted that, after identifying the target service currently performed by the UE, the GW_C may directly confirm, according to the correspondence between a service and gateway deployment, a list of GW_Us capable of serving the target service, and select, from the plurality of GW_Us included in the GW_U list, one GW_U (such as a GW_U at a preferable location) as the target GW_U, but does not need to perform the operation of performing service rule matching and confirming the service policy. That is, for all services, the GW_C takes a processing policy of " confirming, according to a correspondence between a service and gateway deployment, a list of GW_Us capable of serving the target service, and selecting, from the plurality of GW_Us included in the GW_U list, a GW_U at a preferable location as the target GW_U ". The correspondence between a service and gateway deployment is a description for a service supported by a gateway device located at a particular location. For example, a gateway A located at a location a supports services 1, 2, and 3, a gateway B located at a location b supports services 4, 5, and 6, and so on. Moreover, this correspondence may be configured at the GW_C locally, or may be placed at another place (for example, DNS service network) for the GW_C to perform query.

In this embodiment of the present invention, when the GW_U list includes the current GW_U serving the UE and the current GW_U satisfies a service requirement of the target service, the GW_C determines the current GW_U as the target GW_U selected by the GW_C for the target service. When the GW_U list includes the current GW_U serving the UE and the current GW_U does not satisfy a service requirement of the target service, the GW_C determines, in all the GW_Us included in the GW_U list, one GW_U (such as a GW_U at a preferable location) other than the current GW_U as the target GW_U selected by the GW_C for the target service. When the GW_U list does not include the current GW_U serving the UE, the GW_C determines, in all the GW_Us included in the GW_U list, one GW_U (such as a GW_U at a preferable location) as the target GW_U selected by the GW_C for the target service.

In this embodiment of the present invention, after the GW_C selects the target GW_U for the target service, the GW_C performs a bearer processing operation, so as to obtain a target bearer corresponding to the target service, where different bearers are configured to anchor to different gateways, and the target bearer corresponding to the target service is configured to anchor to the target GW_U selected for the target service.

When the GW_U list includes the current GW_U serving the UE and the current GW_U satisfies the service requirement of the target service, the performing, by the GW_C, a corresponding bearer processing operation according to the target GW_U, so as to obtain a target bearer corresponding to the target service may include the following step.

When QCI information requested by the UE is inconsistent with QCI information of all bearers of the current GW_U, the GW_C performs a bearer creation process, so as to obtain the target bearer;
when QCI information requested by the UE is consistent with QCI information of one of all bearers of the current GW_U and the one bearer is not bound to the current GW_U, the GW_C performs a bearer creation process, so as to obtain the target bearer;
when QCI information requested by the UE is consistent with QCI information of one of all bearers of the current GW_U and the one bearer is bound to the current GW_U, the GW_C performs a bearer modification process, so as to obtain the target bearer; or
when a network in which the target service is located is an independent network, the GW_C performs a bearer creation process, so as to obtain the target bearer.

When the GW_U list includes the current GW_U serving the UE and the current GW_U does not satisfy the service requirement of the target service, or when the GW_U list does not include the current GW_U serving the UE, the performing, by the GW_C, a corresponding bearer processing operation according to the target GW_U may include the following step.

The GW_C performs a bearer creation process, so as to obtain the target bearer.

The performing, by the GW_C, a bearer modification process is the prior art, and is not specifically described in detail again in this embodiment of the present invention. The performing, by the GW_C, a bearer creation process may be described in steps S404 to S409 that are as follows:
S404. The GW_C sends a bearer creation request to the MME.

The bearer creation request may carry a fully qualified tunnel endpoint identifier (F-TEID, Full Qualified Tunnel Endpoint Identifier) of an S1_U interface of the target GW_U.

S405. The MME sends, to the eNB, a notification message used to notify the eNB to establish an evolved-radio access bearer (E-RAB, Envolved-Radio Access Bearer).

The notification message carries the F-TEID of the S1_U interface of the target GW_U.

S406. The MME sends, to the UE, a non-access stratum (NAS, Non-Access Stratum) message used to notify the UE to create a bearer.

The NAS message may include a bearer ID of a bearer that the UE needs to create, corresponding TFT information, QoS information, and the like.

S407. The eNB establishes a bearer between the eNB and the target GW-U according to the F-TEID in the notification message, and sends a first bearer creation response to the MME.

The first bearer creation response is used to indicate that the bearer between the eNB and the target GW_U is established.

S408. The UE establishes a bearer between the UE and the eNB according to the NAS message, and sends a second bearer creation response to the MME.

The second bearer creation response is used to indicate that the bearer between the UE and the eNB is established.

S409. The MME sends a third bearer creation response to the GW_C according to the first bearer creation response and the second bearer creation response.

The third bearer creation response is used to indicate that a new bearer is created, and QoS information provided by the newly created bearer satisfies QoS information requested by the UE.

S410. The GW_C sends information corresponding to the target bearer to the target GW_U.

In this embodiment of the present invention, the GW_C sends the information corresponding to the target bearer to the target gateway, so as to anchor the target bearer to the target gateway, where the information corresponding to the target bearer is used to implement the service flow transmission between the UE and the network that corresponds to the target service.

The information corresponding to the target bearer may include S1_U interface serving gateway fully qualified tunnel endpoint identifier (SGW F-TEID, Service Gateway Full Qualified Tunnel Endpoint Identifier) information, where the S1_U interface SGW F-TEID information is used to instruct the target gateway to receive an uplink service flow that matches the S1_U interface SGW F-TEID information and that is sent by the UE; the information corresponding to the target bearer includes traffic flow template (TFT, Traffic flow template) information, and the TFT information is used to instruct the target gateway to receive a downlink service flow that needs to be sent to the UE and that matches the TFT information; or the information corresponding to the target bearer may include S1-U interface eNB F-TEID information, and the S1-U interface eNB F-TEID information is used to instruct the target gateway to send, to an eNB according to the S1-U interface eNB F-TEID information, a received downlink service flow that needs to be sent to the UE.

S411. The UE performs service flow transmission of the target service between the UE and the target GW_U by using the eNB.

A process of service flow uplink transmission of the target service is as follows: The UE obtains the newly created bearer by means of matching according to the TFT information in the NAS message, and sends an uplink service packet to a network side by using the newly created bearer; and the eNB receives the uplink service packet sent by the UE, performs matching between the uplink service packet and a context of the E-RAB and sends the uplink service packet to the target GW_U (that is, the GW_C is the GW_U selected by the target service) based on the F-TEID information of the S1_U interface, and after receiving the uplink service packet of the target service sent by the eNB, the target GW_U sends the uplink service packet to the network that corresponds to the target service, that is, the GW_C implements service flow transmission between the UE and the target service by using the target GW_U.

It can be learned that, by using the operation, a service flow currently performed by the UE may be bound to a bearer obtained by means of the bearer processing operation, the bearer is anchored to one GW_U selected according to the correspondence between a service and gateway deployment, and no GW_U needs to be selected according to APN information. That is, different GW_Us can be selected for service flows that have same APN information, and then the service flows that have the same APN information access different PDN networks, so as to implement flexible service flow deployment in the PDN networks.

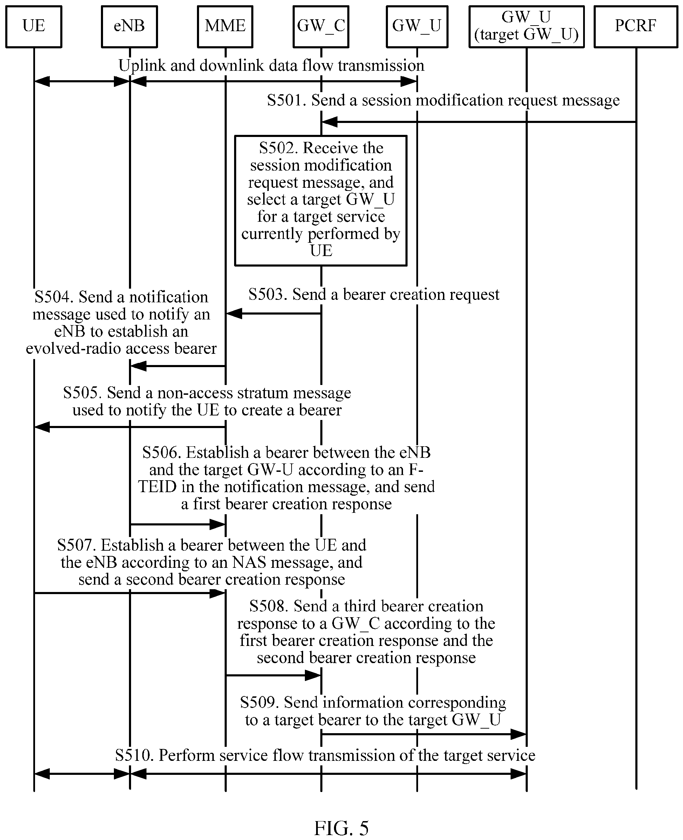

Referring to FIG. 5, FIG. 5 is a schematic flowchart of still another service flow transmission method according to another embodiment of the present invention. FIG. 5 is a schematic flowchart of a service flow transmission method when a first gateway device determines, according to packet characteristic information in a session modification request message sent by a PCRF entity, a target service currently performed by UE, and the first gateway device is a GW_C. Uplink and downlink transmission is performed on a data flow of the UE between an eNB and a current GW_U (that is, Old_GW_U). As shown in FIG. 5, the service flow transmission method may include the following steps.

S501. The PCRF entity sends a session modification request message to the GW_C.

The session modification request message carries packet characteristic information such as TFT information, packet filtering information, or 5-tuple information of a packet. Optionally, the session modification request message may further carry QoS information corresponding to the packet, such as QCI information and/or guaranteed bit rate (GBR, Guaranteed Bit Rate) information required by the UE. This is not limited in this embodiment of the present invention.

S502. The GW_C receives the session modification request message, and selects a target GW_U for a target service currently performed by the UE.

In this embodiment of the present invention, the target GW_U selected by the GW_C for the target service currently performed by the UE is a GW_U that has a relatively optimized service path and that is close to a service server as much as possible, and an implementation of the target GW_U selected by the GW_C for the target service currently performed by the UE is as follows: The target service currently performed by the UE is identified after the session modification request message is received, and an appropriate target GW_U is selected for the target service currently performed by the UE according to a correspondence between a service and gateway deployment. A more specific implementation is as follows:
After receiving the session modification request message, the GW_C identifies, according to the packet characteristic information included in the session modification request message, the target service currently performed by the UE, for example, identifies, according to target address information, a specific website that the UE currently needs to access;
after determining the target service, the GW_C performs service rule matching, and confirms a service policy, where the service policy is used to provide a basis on which the target GW_U is selected, for example, a gateway close to the service server as much as possible is selected, that is, enabling of a local service breakout or enabling local breakout (LBO, Local Breakout) characteristic is required; and
the GW_C confirms, according to a correspondence between a service and gateway deployment, a list of GW_Us capable of serving the target service, and selects, from the plurality of GW_Us included in the GW_U list, a GW_U at a preferable location as the target GW_U, where the GW_U list may include a plurality of GW_Us capable of serving the target service, and the correspondence between a service and gateway deployment may be statically configured, or may be delivered by an OM system to the GW_C, and this is not limited in this embodiment of the present invention.

It should be noted that, after identifying the target service currently performed by the UE, the GW_C may directly confirm, according to the correspondence between a service and gateway deployment, a list of GW_Us capable of serving the target service, and select, from the plurality of GW_Us included in the GW_U list, one GW_U (such as a GW_U at a preferable location) as the target GW_U, but does not need to perform the operation of performing service rule matching and confirming the service policy. That is, for all services, the GW_C takes a processing policy of " confirming, according to a correspondence between a service and gateway deployment, a list of GW_Us capable of serving the target service, and selecting, from the plurality of GW_Us included in the GW_U list, a GW_U at a preferable location as the target GW_U ". The correspondence between a service and gateway deployment is a description for a service supported by a gateway device located at a particular location. For example, a gateway A located at a location a supports services 1, 2, and 3, a gateway B located at a location b supports services 4, 5, and 6, and so on. Moreover, this correspondence may be configured at the GW_C locally, or may be placed at another place (for example, DNS service network) for the GW_C to perform query.

In this embodiment of the present invention, when the GW_U list includes the current GW_U serving the UE and the current GW_U satisfies a service requirement of the target service, the GW_C determines the current GW_U as the target GW_U selected by the GW_C for the target service. When the GW_U list includes the current GW_U serving the UE and the current GW_U does not satisfy a service requirement of the target service, the GW_C determines, in all the GW_Us included in the GW_U list, one GW_U (such as a GW_U at a preferable location) other than the current GW_U as the target GW_U selected by the GW_C for the target service. When the GW_U list does not include the current GW_U serving the UE, the GW_C determines, in all the GW_Us included in the GW_U list, one GW_U (such as a GW_U at a preferable location) as the target GW_U selected by the GW_C for the target service.

In this embodiment of the present invention, after the GW_C selects the target GW_U for the target service, the GW_C performs a bearer processing operation, so as to obtain a target bearer corresponding to the target service, where different bearers are configured to anchor to different gateways, and the target bearer corresponding to the target service is configured to anchor to the target GW_U selected for the target service.

When the GW_U list includes the current GW_U serving the UE and the current GW_U satisfies the service requirement of the target service, the performing, by the GW_C, a corresponding bearer processing operation according to the target GW_U, so as to obtain a target bearer corresponding to the target service may include the following step.

When QCI information requested by the UE is inconsistent with QCI information of all bearers of the current GW_U, the GW_C performs a bearer creation process, so as to obtain the target bearer;
when QCI information requested by the UE is consistent with QCI information of one of all bearers of the current GW_U and the one bearer is not bound to the current GW_U, the GW_C performs a bearer creation process, so as to obtain the target bearer; or
when QCI information requested by the UE is consistent with QCI information of one of all bearers of the current GW_U and the one bearer is bound to the current GW_U, the GW_C performs a bearer modification process, so as to obtain the target bearer.

When the GW_U list includes the current GW_U serving the UE and the current GW_U does not satisfy the service requirement of the target service, or when the GW_U list does not include the current GW_U serving the UE, the performing, by the GW_C, a corresponding bearer processing operation according to the target GW_U may include the following step.

The GW_C performs a bearer creation process, so as to obtain the target bearer.

The performing, by the GW_C, a bearer modification process is the prior art, and is not specifically described in detail again in this embodiment of the present invention. The performing, by the GW_C, a bearer creation process may be described in steps S503 to S508 that are as follows:
S503. The GW_C sends a bearer creation request to the MME.

The bearer creation request may carry a fully qualified tunnel endpoint identifier (F-TEID, Full Qualified Tunnel Endpoint Identifier) of an S1_U interface of the target GW_U.

S504. The MME sends, to the eNB, a notification message used to notify the eNB to establish an evolved-radio access bearer E-RAB.

The notification message carries the F-TEID of the S1_U interface of the target GW_U.

S505. The MME sends, to the UE, a non-access stratum NAS message used to notify the UE to create a bearer.

The NAS message may include a bearer ID of a bearer that the UE needs to create, corresponding TFT information, QoS information, and the like.

S506. The eNB establishes a bearer between the eNB and the target GW-U according to the F-TEID in the notification message, and sends a first bearer creation response to the MME.

The first bearer creation response is used to indicate that the bearer between the eNB and the target GW_U is established.

S507. The UE establishes a bearer between the UE and the eNB according to the NAS message, and sends a second bearer creation response to the MME.

The second bearer creation response is used to indicate that the bearer between the UE and the eNB is established.

S508. The MME sends a third bearer creation response to the GW_C according to the first bearer creation response and the second bearer creation response.

The third bearer creation response is used to indicate that a new bearer is created, and QoS information provided by the newly created bearer satisfies QoS information requested by the UE.

S509. The GW_C sends information corresponding to the target bearer to the target GW_U.

In this embodiment of the present invention, the GW_C sends the information corresponding to the target bearer to the target gateway, so as to anchor the target bearer to the target gateway, where the information corresponding to the target bearer is used to implement the service flow transmission between the UE and the network that corresponds to the target service.

The information corresponding to the target bearer may include S1_U interface serving gateway fully qualified tunnel endpoint identifier (SGW F-TEID, Service Gateway Full Qualified Tunnel Endpoint Identifier) information, where the S1_U interface SGW F-TEID information is used to instruct the target gateway to receive an uplink service flow that matches the S1_U interface SGW F-TEID information and that is sent by the UE; the information corresponding to the target bearer includes traffic flow template (TFT, Traffic flow template) information, and the TFT information is used to instruct the target gateway to receive a downlink service flow that needs to be sent to the UE and that matches the TFT information; or the information corresponding to the target bearer may include S1-U interface eNB F-TEID information, and the S1-U interface eNB F-TEID information is used to instruct the target gateway to send, to an eNB according to the S1-U interface eNB F-TEID information, a received downlink service flow that needs to be sent to the UE.

S510. The UE performs service flow transmission of the target service between the UE and the target GW_U by using the eNB.

A process of service flow uplink transmission of the target service is as follows: The UE obtains the newly created bearer by means of matching according to the TFT information in the NAS message, and sends an uplink service packet to a network side by using the newly created bearer; and the eNB receives the uplink service packet sent by the UE, performs matching between the uplink service packet and a context of the E-RAB and sends the uplink service packet to the target GW_U (that is, the GW_C is the GW_U selected by the target service) based on the F-TEID information of the S1_U interface, and after receiving the uplink service packet of the target service sent by the eNB, the target GW_U sends the uplink service packet to the network that corresponds to the target service.

It can be learned that, by using the operation, a service flow currently performed by the UE may be bound to a bearer obtained by means of the bearer processing operation, the bearer is anchored to one GW_U selected according to the correspondence between a service and gateway deployment, and no GW_U needs to be selected according to APN information. That is, different GW_Us can be selected for service flows that have same APN information, and then the service flows that have the same APN information access different PDN networks, so as to implement flexible service flow deployment in the PDN networks.

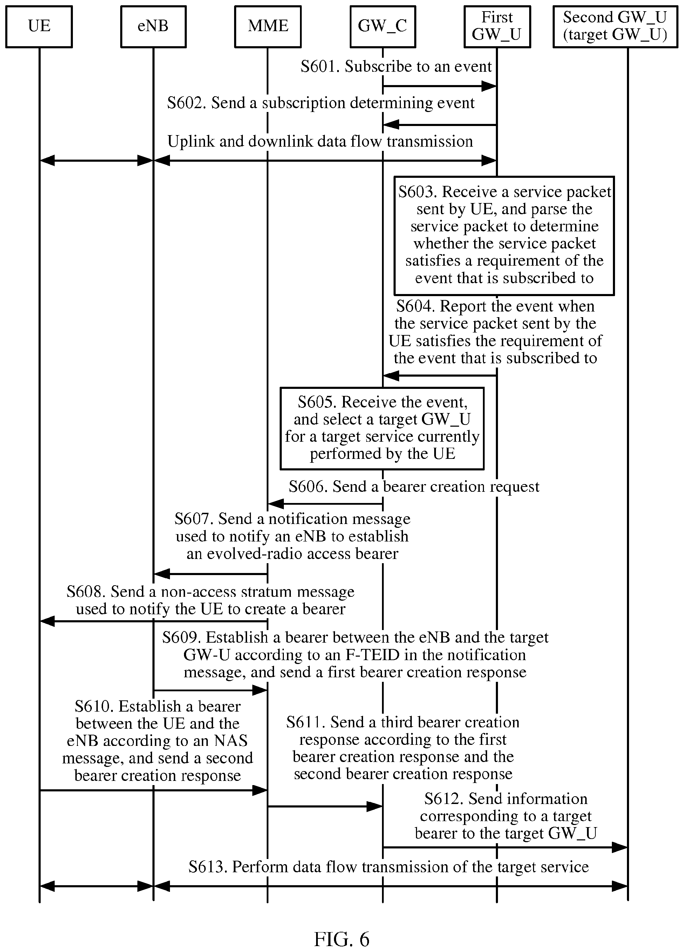

Referring to FIG. 6, FIG. 6 is a schematic flowchart of still another service flow transmission method according to another embodiment of the present invention. FIG. 6 is a schematic flowchart of a service flow transmission method when a first gateway device determines, according to an event reported by a current GW_U serving UE, a target service currently performed by the UE, and the first gateway device is a GW_C. As shown in FIG. 6, the service flow transmission method may include the following steps.

S601. The GW_C subscribes to an event from a first GW_U.

The first GW_U is a GW_U to which a default bearer is anchored, and the GW_C subscribes to the event from the first GW_U, so as to trigger the first GW_U to identify a service packet when the service packet sent by the UE is received, and report the event to the GW_C when the service packet satisfies a requirement of the event that is subscribed to. Usually, the GW_C subscribes to an event based on the GW_U to which the default bearer is anchored, and the event that is subscribed to may be service-packet-based L3/L4 information, L7 protocol information, or L7 content information (such as a uniform resource locator URL). This is not limited in this embodiment of the present invention.

S602. The first GW_U sends, to the GW_C, a subscription determining message for the event that is subscribed to.

S603. The first GW_U receives a service packet sent by the UE, and parses the service packet to determine whether the service packet satisfies a requirement of the event that is subscribed to.

S604. The first GW_U reports the event to the GW_C when the service packet sent by the UE satisfies the requirement of the event that is subscribed to.

The event may carry packet characteristic information such as TFT information, packet filtering information, or 5-tuple information of a packet. Optionally, the event may further carry QoS information corresponding to the packet, such as QCI information and/or GBR information required by the packet. This is not limited in this embodiment of the present invention.

S605. The GW_C receives the event, and selects a target GW_U for a target service currently performed by the UE.

In this embodiment of the present invention, the target GW_U selected by the GW_C for the target service currently performed by the UE is a GW_U that has a relatively optimized service path and that is close to a service server as much as possible, and an implementation of the target GW_U selected by the GW_C for the target service currently performed by the UE is as follows: The target service currently performed by the UE is identified after the event is received, and an appropriate target GW_U is selected for the target service currently performed by the UE according to a correspondence between a service and gateway deployment. A more specific implementation is as follows:
After receiving the event sent by the first GW_U, the GW_C identifies, according to the packet characteristic information carried in the event, the target service currently performed by the UE, for example, identifies, according to target address information, a specific website that the UE currently needs to access;
after determining the target service, the GW_C performs service rule matching, and confirms a service policy, where the service policy is used to provide a basis on which the target GW_U is selected, for example, a gateway close to the service server as much as possible is selected, that is, enabling of a local service breakout or enabling local breakout (LBO, Local Breakout) characteristic is required; and
the GW_C confirms, according to a correspondence between a service and gateway deployment, a list of GW_Us capable of serving the target service, and selects, from the plurality of GW_Us included in the GW_U list, a GW_U at a preferable location as the target GW_U, where the GW_U list may include a plurality of GW_Us capable of serving the target service, and the correspondence between a service and gateway deployment may be statically configured, or may be delivered by an OM system to the GW_C, and this is not limited in this embodiment of the present invention.

It should be noted that, after identifying the target service currently performed by the UE, the GW_C may directly confirm, according to the correspondence between a service and gateway deployment, a list of GW_Us capable of serving the target service, and select, from the plurality of GW_Us included in the GW_U list, one GW_U (such as a GW_U at a preferable location) as the target GW_U, but does not need to perform the operation of performing service rule matching and confirming the service policy. That is, for all services, the GW_C takes a processing policy of " confirming, according to a correspondence between a service and gateway deployment, a list of GW_Us capable of serving the target service, and selecting, from the plurality of GW_Us included in the GW_U list, a GW_U at a preferable location as the target GW_U ".

In this embodiment of the present invention, when the GW_U list includes the current GW_U serving the UE and the current GW_U satisfies a service requirement of the target service, the GW_C determines the current GW_U as the target GW_U selected for the target service. When the GW_U list includes the current GW_U serving the UE and the current GW_U does not satisfy a service requirement of the target service, the GW_C determines, in all the GW_Us included in the GW_U list, one GW_U (such as a GW_U at a preferable location) other than the current GW_U as the target GW_U selected for the target service. When the GW_U list does not include the current GW_U serving the UE, the GW_C determines, in all the GW_Us included in the GW_U list, one GW_U (such as a GW_U at a preferable location) as the target GW_U selected for the target service.

In this embodiment of the present invention, after the GW_C selects the target GW_U for the target service, the GW_C performs a corresponding bearer processing operation, so as to obtain a target bearer corresponding to the target service, where different bearers are configured to anchor to different gateways, and the target bearer corresponding to the target service is configured to anchor to the target GW_U selected for the target service.

When the GW_U list includes the current GW_U serving the UE and the current GW_U satisfies the service requirement of the target service, the performing, by the GW_C, a corresponding bearer processing operation according to the target GW_U, so as to obtain a target bearer corresponding to the target service may include the following step.

When QCI information requested by the UE is inconsistent with QCI information of all bearers of the current GW_U, the GW_C performs a bearer creation process, so as to obtain the target bearer;
when QCI information requested by the UE is consistent with QCI information of one of all bearers of the current GW_U and the one bearer is not bound to the current GW_U, the GW_C performs a bearer creation process, so as to obtain the target bearer; or
when QCI information requested by the UE is consistent with QCI information of one of all bearers of the current GW_U and the one bearer is bound to the current GW_U, the GW_C performs a bearer modification process, so as to obtain the target bearer.

When the GW_U list includes the current GW_U serving the UE and the current GW_U does not satisfy the service requirement of the target service, or when the GW_U list does not include the current GW_U serving the UE, the performing, by the GW_C, a corresponding bearer processing operation according to the target GW_U may include the following step.

The GW_C performs a bearer creation process, so as to obtain the target bearer.

The performing, by the GW_C, a bearer modification process is the prior art, and is not specifically described in detail again in this embodiment of the present invention. The performing, by the GW_C, a bearer creation process may be described in steps S606 to S611 that are as follows:
S606. The GW_C sends a bearer creation request to the MME.

The bearer creation request may carry a fully qualified tunnel endpoint identifier F-TEID of an S1_U interface of the target GW_U.

S607. The MME sends, to the eNB, a notification message used to notify the eNB to establish an evolved-radio access bearer E-RAB.

The notification message carries the F-TEID of the S1_U interface of the target GW_U.

S608. The MME sends, to the UE, a non-access stratum NAS message used to notify the UE to create a bearer.

The NAS message may include a bearer ID of a bearer that the UE needs to create, corresponding TFT information, QoS information, and the like.

S609. The eNB establishes a bearer between the eNB and the target GW-U according to the F-TEID in the notification message, and sends a first bearer creation response to the MME.

The first bearer creation response is used to indicate that the bearer between the eNB and the target GW_U is established.

S610. The UE establishes a bearer between the UE and the eNB according to the NAS message, and sends a second bearer creation response to the MME.

The second bearer creation response is used to indicate that the bearer between the UE and the eNB is established.

S611. The MME sends a third bearer creation response to the GW_C according to the first bearer creation response and the second bearer creation response.

The third bearer creation response is used to indicate that a new bearer is created, and QoS information provided by the newly created bearer satisfies QoS information requested by the UE.

S612. The GW_C sends information corresponding to the target bearer to the target GW_U.

In this embodiment of the present invention, the GW_C sends the information corresponding to the target bearer to the target gateway, so as to anchor the target bearer to the target gateway, where the information corresponding to the target bearer is used to implement the service flow transmission between the UE and the network that corresponds to the target service.

The information corresponding to the target bearer may include S1_U interface serving gateway fully qualified tunnel endpoint identifier (SGW F-TEID, Service Gateway Full Qualified Tunnel Endpoint Identifier) information, where the S1_U interface SGW F-TEID information is used to instruct the target gateway to receive an uplink service flow that matches the S1_U interface SGW F-TEID information and that is sent by the UE; the information corresponding to the target bearer includes traffic flow template (TFT, Traffic flow template) information, and the TFT information is used to instruct the target gateway to receive a downlink service flow that needs to be sent to the UE and that matches the TFT information; or the information corresponding to the target bearer may include S1-U interface eNB F-TEID information, and the S1-U interface eNB F-TEID information is used to instruct the target gateway to send, to an eNB according to the S1-U interface eNB F-TEID information, a received downlink service flow that needs to be sent to the UE.

S613. The UE performs service flow transmission of the target service between the UE and the target GW_U by using the eNB.

A process of service flow uplink transmission of the target service is as follows: The UE obtains the newly created bearer by means of matching according to the TFT information in the NAS message, and sends an uplink service packet to a network side by using the newly created bearer; and the eNB receives the uplink service packet sent by the UE, performs matching between the uplink service packet and a context of the E-RAB and sends the uplink service packet to the target GW_U (that is, the GW_C is the GW_U selected by the target service) based on the F-TEID information of the S1_U interface, and after receiving the uplink service packet of the target service sent by the eNB, the target GW_U sends the uplink service packet to the network that corresponds to the target service.

In this embodiment of the present invention, it should be noted that, step S601 and step S602 are optional. That is, the GW_U may directly detect a service packet, and actively report an event to the GW_C according to a preset service matching rule, and the GW_C directly perceives, by using the event reported by the GW_U, a target service currently performed by the UE, and may further obtain a corresponding service rule, QoS information, and the like by using the event reported by the GW_U. This is not limited in this embodiment of the present invention.

It can be learned that, by using the operation, a service flow currently performed by the UE may be bound to a new bearer, the bearer is anchored to one GW_U selected according to the correspondence between a service and gateway deployment, and no GW_U needs to be selected according to APN information. That is, different GW_Us can be selected for service flows that have same APN information, and then the service flows that have the same APN information access different PDN networks, so as to implement flexible service flow deployment in the PDN networks.

It should be noted that, in the method embodiments shown in FIG. 4 to FIG. 6, the GW_C first selects the target GW_U for the target service, and then performs the bearer processing operation to obtain the target bearer. In this case, the performing the bearer processing operation may include performing the bearer creation process or performing the bearer modification process. In actual application, the GW_C may alternatively first perform the corresponding bearer processing operation to obtain the target bearer, and then select the target GW_U for the target service. In this case, the performing the corresponding bearer processing operation may include: performing the bearer creation process. Details are as follows:
If QCI information of the target service is inconsistent with QCI information of each of all bearers of the UE, the GW_C performs the bearer creation process;
if QCI information of the target service is consistent with QCI information of a first bearer of the UE and a gateway to which the first bearer is anchored is incapable of serving the target service, the GW_C device performs the bearer creation process;
if QCI information of the target service is consistent with QCI information of a second bearer of the user equipment UE and a gateway to which the second bearer is anchored is capable of serving the target service, the GW_C performs the bearer modification process; or
according to a particular configuration, when the network in which the target service is located is an independent network (that is, the network in which the target service is located is isolated from a network in which another service is located, and may also be referred to as a slicing_slicing network), for example, when the network in which the target service is located is a VPN network (may be considered as a slicing network), the GW_C performs the bearer creation process, so as to obtain the target bearer.

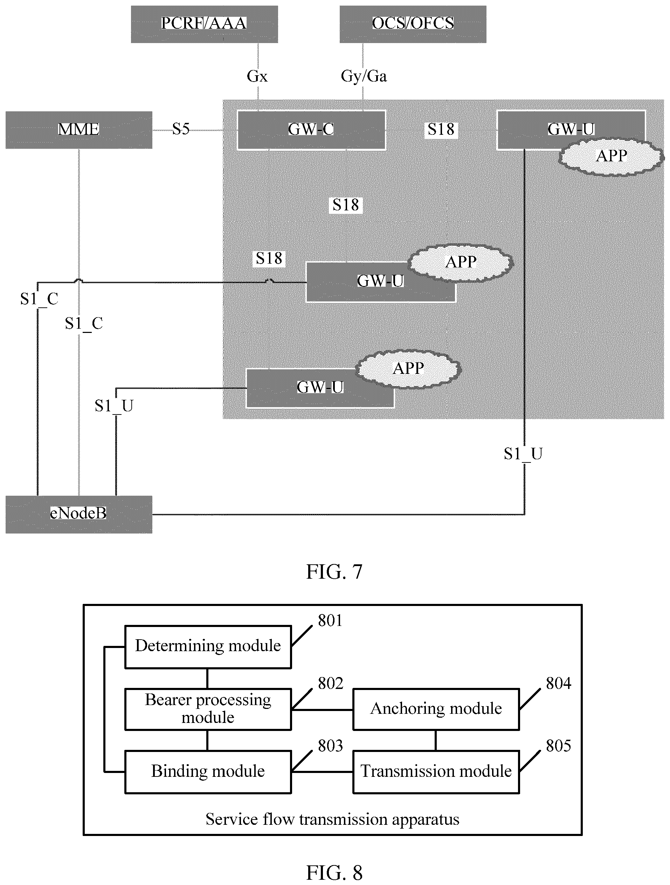

It should be noted that, a schematic diagram of an effect that the method embodiment can achieve may be shown in FIG. 7, and FIG. 7 is a schematic diagram of an effect according to an embodiment of the present invention. As shown in FIG. 7, technical effects achieved by the method embodiment are as follows:
1. A GW_C binds service flows related to different applications (APP, Application) to a particular bearer (which may be implemented by using a TFT), and anchors the particular bearer to a particular GW_U (that is, the target GW_U mentioned in the method embodiment).
2. Independent user plane of GPRS tunneling protocol (GTP-U, User plane of GPRS Tunneling Protocol) link information is configured for a bearer according to a need, and based on this, the eNB may distribute a service packet to different GW_Us.
3. An independent communication tunnel may be established between the GW_U and an APP, so as to ensure isolation between applications.
4. For UE, a same IP address may be used to access different applications, and APN information does not need to be configured for each application.

Referring to FIG. 8, FIG. 8 is a schematic structural diagram of a service flow transmission apparatus according to an embodiment of the present invention. As shown in FIG. 8, the apparatus may include a determining module 801, a bearer processing module 802, a binding module 803, an anchoring module 804, and a transmission module 805.

The determining module 801 is configured to determine a target service currently performed by UE.

The bearer processing module 802 is configured to perform a bearer processing operation, so as to obtain a target bearer corresponding to the target service.

The binding module 803 is configured to bind a service flow of the target service to the target bearer.

The anchoring module 804 is configured to anchor the target bearer to a target gateway.

The transmission module 805 is configured to implement, by using the target gateway, service flow transmission between the UE and a network that corresponds to the target service.

In this embodiment of the present invention, a service flow can be bound to a bearer obtained after performing a bearer operation and the bearer is anchored to an appropriate gateway (that is, the target gateway), thereby implementing flexible service flow deployment, and improving service flow deployment flexibility.

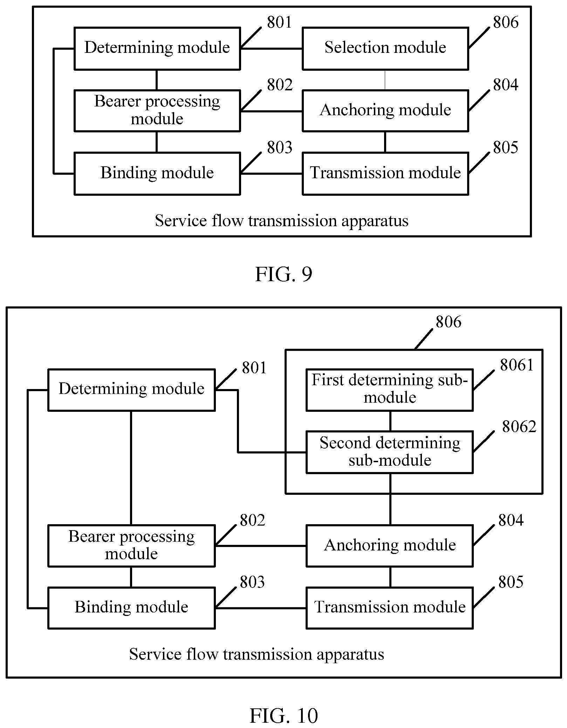

In an optional embodiment, based on a structure of the apparatus shown in FIG. 8, the apparatus may further include a selection module 806. In this case, the apparatus may be shown in FIG. 9, and FIG. 9 is a schematic structural diagram of another service flow transmission apparatus according to an embodiment of the present invention.

The selection module 806 is configured to select the target gateway for the target service according to a correspondence between a service and gateway deployment.

In the optional embodiment, in a manner of selecting the target gateway according to the correspondence between a service and gateway deployment, different target gateways can be selected for service flows that have same APN information, and then the service flows that have the same APN information access different PDN networks, so as to implement flexible service flow deployment in the PDN networks.

The selection module 806 may select the target gateway for the target service according to the correspondence between a service and gateway deployment after the determining module 801 determines the target service currently performed by the UE and before the bearer processing module 802 performs the bearer processing operation, so as to obtain the target bearer corresponding to the target service. In this case, the bearer processing module 802 is specifically configured to perform a bearer creation process or a bearer modification process according to the target service. Alternatively, the selection module 806 may select the target gateway for the target service according to the correspondence between a service and gateway deployment after the bearer processing module 802 performs the bearer processing operation, so as to obtain the target bearer corresponding to the target service and before the binding module 803 binds the service flow of the target service to the target bearer, or after the binding module 803 binds the service flow of the target service to the target bearer and before the anchoring module 804 anchors the target bearer to the target gateway. In this case, the bearer processing module 802 is specifically configured to perform a bearer creation process.

In an optional implementation, a specific manner in which the determining module 801 determines a target service currently performed by user equipment UE may be as follows:
A service request message sent by the UE is received, where the service request message includes packet characteristic information; and
the target service is determined according to the packet characteristic information.

In another optional implementation, a specific manner in which the determining module 801 determines a target service currently performed by user equipment UE may be as follows:
A session modification request message sent by a PCRF entity is received, where the session modification request message includes packet characteristic information; and
the target service is determined according to the packet characteristic information.

In still another optional implementation, a specific manner in which the determining module 801 determines a target service currently performed by user equipment UE may be as follows:
An event reported by a second gateway device is received, where the event is reported by the second gateway device when detecting that a service packet received by the second gateway device satisfies a preset condition; and
the target service is determined according to the event.

In another optional embodiment, the selection module 806 may include a first determining sub-module 8061 and a second determining sub-module 8062. In this case, a structure of the apparatus may be shown in FIG. 10, and FIG. 10 is a schematic structural diagram of still another service flow transmission apparatus according to an embodiment of the present invention.

The first determining sub-module 8061 is configured to determine, according to the correspondence between a service and gateway deployment, a list of target gateways capable of serving the UE, where the target gateway list includes a plurality of (that is, at least one) gateways capable of serving the UE.

The second determining sub-module 8062 is configured to determine, in the plurality of gateways included in the target gateway list, a gateway as the target gateway.

Optionally, a specific manner in which the second determining sub-module 8062 determines, in the plurality of gateways included in the target gateway list, a gateway as the target gateway may be as follows:
If the plurality of gateways included in the target gateway list include a current gateway serving the UE and the current gateway satisfies a service requirement of the target service, the current gateway is determined as the target gateway. Therefore, in a manner of determining the current gateway as the target gateway, network handover can be reduced, and then processing delay for the target service is reduced.

Optionally, a specific manner in which the second determining sub-module 8062 determines, in the plurality of gateways included in the target gateway list, a gateway as the target gateway may be as follows:
If the plurality of gateways included in the target gateway list include a current gateway serving the UE and the current gateway does not satisfy a service requirement of the target service, a gateway other than the current gateway is determined, in the plurality of gateways included in the target gateway list, as the target gateway; or
if the plurality of gateways included in the target gateway list do not include a current gateway serving the UE, a gateway is determined, in the plurality of gateways included in the target gateway list, as the target gateway.

In the optional embodiment, the target gateway determined by the second determining sub-module 8062 for the target service may be a gateway at a preferable location. Therefore, the processing delay for the target service can be reduced.

In the optional embodiment, further optionally, a specific manner in which the bearer processing module 802 performs a bearer processing operation, so as to obtain a target bearer corresponding to the target service may be as follows:
When the target gateway is not the current gateway serving the UE, a bearer creation process is performed, so as to obtain the target bearer.

In another optional embodiment, a specific manner in which the bearer processing module 802 performs a bearer processing operation, so as to obtain a target bearer corresponding to the target service may be as follows:
A bearer creation process is performed, so as to obtain the target bearer; or
a bearer modification process is performed, so as to obtain the target bearer.

Optionally, a specific manner in which the bearer processing module 802 performs a bearer creation process, so as to obtain the target bearer may be as follows:
If QCI information of the target service is inconsistent with QCI information of each of all bearers of the UE, the bearer creation process is performed, so as to obtain the target bearer;
if QCI information of the target service is consistent with QCI information of a first bearer of the UE and a gateway to which the first bearer is anchored is incapable of serving the target service, the bearer creation process is performed, so as to obtain the target bearer; or
if a network in which the target service is located is an independent network (such as a VPN network), the bearer creation process is performed, so as to obtain the target bearer. That is, when the network in which the target service is located is an independent network, the bearer processing module 802 may directly perform the bearer creation process, QCI information does not need to be determined again, processing is simple, and the target bearer can be rapidly obtained.

Still further optionally, a specific manner in which the bearer processing module 802 performs a bearer modification process, so as to obtain the target bearer may be as follows:
If QCI information of the target service is consistent with QCI information of a second bearer of the UE and a gateway to which the second bearer is anchored is capable of serving the target service, the bearer modification process is performed, so as to obtain the target bearer. Therefore, no new bearer needs to be created, so as to save bearer resources.

In still another embodiment, a specific manner in which the anchoring module 804 anchors the target bearer to a target gateway may be as follows:
The information corresponding to the target bearer is sent to the target gateway, so as to anchor the target bearer to the target gateway, where the information corresponding to the target bearer is used to implement the service flow transmission between the UE and the network that corresponds to the target service.

The information corresponding to the target bearer may include S1_U interface serving gateway fully qualified tunnel endpoint identifier (SGW F-TEID, Service Gateway Full Qualified Tunnel Endpoint Identifier) information, where the S1_U interface SGW F-TEID information is used to instruct the target gateway to receive an uplink service flow that matches the S1_U interface SGW F-TEID information and that is sent by the UE; the information corresponding to the target bearer includes traffic flow template (TFT, Traffic flow template) information, and the TFT information is used to instruct the target gateway to receive a downlink service flow that needs to be sent to the UE and that matches the TFT information; or the information corresponding to the target bearer may include S1-U interface eNB F-TEID information, and the S1-U interface eNB F-TEID information is used to instruct the target gateway to send, to an eNB according to the S1-U interface eNB F-TEID information, a received downlink service flow that needs to be sent to the UE.

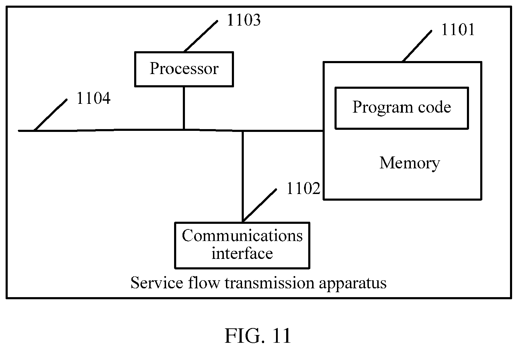

Referring to FIG. 11, FIG. 11 is a schematic structural diagram of still another service flow transmission apparatus according to an embodiment of the present invention. As shown in FIG. 11, the apparatus may include: a memory 1101, a communications interface 1102, at least one processor 1103 (such as CPU), and at least one communications bus 1104. The memory 1101 may be a high-speed RAM memory, or may be a non-volatile memory (non-volatile memory) such as at least one magnetic disk memory. Optionally, the memory 1101 may be at least one storage apparatus located away from the processor 1103.

The communications bus 1104 is configured to implement connection and communication between these components.

The memory 1101 stores a set of program code, and the processor 1103 is configured to invoke the program code stored in the memory 1101, and is configured to perform the following operations.

A target service currently performed by UE is determined, a bearer processing operation is performed, so as to obtain a target bearer corresponding to the target service, a service flow of the target service is bound to the target bearer, and the target bearer is anchored to a target gateway.

The communications interface 1102 is configured to implement, by using the target gateway, service flow transmission between the UE and a network that corresponds to the target service.

In an optional embodiment, the processor 1103 is configured to invoke the program code stored in the memory 1101, and may be further configured to perform the following operation.

The target gateway is selected for the target service according to a correspondence between a service and gateway deployment.

Optionally, a specific manner in which the processor 1103 selects the target gateway for the target service according to the correspondence between a service and gateway deployment may be as follows:
A list of target gateways capable of serving the UE is determined according to the correspondence between a service and gateway deployment, where the target gateway list includes a plurality of gateways capable of serving the UE.

A gateway is determined, in the plurality of gateways included in the target gateway list, as the target gateway.

Further optionally, a specific manner in which the processor 1103 determines, in the plurality of gateways included in the target gateway list, a gateway as the target gateway may be as follows:
If the plurality of gateways included in the target gateway list include a current gateway serving the UE and the current gateway satisfies a service requirement of the target service, the current gateway is determined as the target gateway.

Further optionally, a specific manner in which the processor 1103 determines, in the plurality of gateways included in the target gateway list, a gateway as the target gateway may be as follows:
If the plurality of gateways included in the target gateway list include a current gateway serving the UE and the current gateway does not satisfy a service requirement of the target service, a gateway other than the current gateway is determined, in the plurality of gateways included in the target gateway list, as the target gateway; or
if the plurality of gateways included in the target gateway list do not include a current gateway serving the UE, a gateway is determined, in the plurality of gateways included in the target gateway list, as the target gateway.

In the optional embodiment, still further optionally, a specific manner in which the processor 1103 performs a bearer processing operation, so as to obtain a target bearer corresponding to the target service may be as follows:
When the target gateway is not the current gateway serving the UE, a bearer creation process is performed, so as to obtain the target bearer.

In another embodiment, a specific manner in which the processor 1103 determines a target service currently performed by UE may be as follows:
A service request message sent by the UE is received, where the service request message includes packet characteristic information; and
the target service is determined according to the packet characteristic information.

In still another embodiment, a specific manner in which the processor 1103 determines a target service currently performed by UE may be as follows:
A session modification request message sent by a PCRF entity is received, where the session modification request message includes packet characteristic information; and
the target service is determined according to the packet characteristic information.

In still another optional embodiment, a specific manner in which the processor 1103 determines a target service currently performed by UE may be as follows:
An event reported by a second gateway device is received, where the event is reported by the second gateway device when detecting that a service packet received by the second gateway device satisfies a preset condition; and
the target service is determined according to the event.

In still another optional embodiment, a specific manner in which the processor 1103 performs a corresponding bearer processing operation, so as to obtain a target bearer corresponding to the target service may be as follows:
A bearer creation process is performed, so as to obtain the target bearer; or
a bearer modification process is performed, so as to obtain the target bearer.

Optionally, a specific manner in which the processor 1103 performs a bearer creation process, so as to obtain the target bearer may be as follows:
If quality of service class identifier QCI information of the target service is inconsistent with QCI information of each of all bearers of the UE, the bearer creation process is performed, so as to obtain the target bearer;
if QCI information of the target service is consistent with QCI information of a first bearer of the UE and a gateway to which the first bearer is anchored is incapable of serving the target service, the bearer creation process is performed, so as to obtain the target bearer; or
if the network in which the target service is located is an independent network (such as a VPN network), the bearer creation process is performed, so as to obtain the target bearer.

Optionally, a specific manner in which the processor 1103 performs a bearer modification process, so as to obtain the target bearer may be as follows:
If QCI information of the target service is consistent with QCI information of a second bearer of the UE and a gateway to which the second bearer is anchored is capable of serving the target service, the bearer modification process is performed, so as to obtain the target bearer.

In still another optional embodiment, a specific manner in which the processor 1103 anchors the target bearer to a target gateway may be as follows:
Information corresponding to the target bearer is sent to the target gateway, where the information corresponding to the target bearer is used to implement the service flow transmission between the UE and the network that corresponds to the target service.

Optionally, the information corresponding to the target bearer may include S1_U interface serving gateway fully qualified tunnel endpoint identifier (SGW F-TEID, Service Gateway Full Qualified Tunnel Endpoint Identifier) information, where the S1_U interface SGW F-TEID information is used to instruct the target gateway to receive an uplink service flow that matches the S1_U interface SGW F-TEID information and that is sent by the UE; the information corresponding to the target bearer includes traffic flow template (TFT, Traffic flow template) information, and the TFT information is used to instruct the target gateway to receive a downlink service flow that needs to be sent to the UE and that matches the TFT information; or the information corresponding to the target bearer may include S1-U interface eNB F-TEID information, and the S1-U interface eNB F-TEID information is used to instruct the target gateway to send, to an eNB according to the S1-U interface eNB F-TEID information, a received downlink service flow that needs to be sent to the UE.

It can be learned that, according to the embodiments of the present invention, a service flow can be bound to a bearer obtained by performing a bearer processing operation, an appropriate gateway can be selected for the service flow according to a correspondence between a service and gateway deployment, and the obtained bearer can be anchored to the appropriate gateway, so as to anchor different bearers of a same PDN connection to different gateways, thereby implementing flexible service flow deployment, and improving service flow deployment flexibility.

It should be noted that, in the foregoing embodiments, the descriptions of the embodiments have respective focuses. For a part that is not described in detail in an embodiment, refer to related descriptions in other embodiments. In addition, a person skilled in the art should also appreciate that all the embodiments described in the specification are exemplary embodiments, and the related actions, modules, and submodules are not necessarily mandatory to the present invention.

A sequence of the steps of the method in the embodiments of the present invention may be adjusted, and certain steps may also be merged or removed according to an actual need.

Merging, division, and removing may be performed on the modules and submodules in the first gateway device in the embodiments of the present invention according to an actual need.

The modules and submodules of the embodiments of the present invention may be executed by a universal integrated circuit, such as a CPU (Central Processing Unit, central processing unit) or an ASIC (Application Specific Integrated Circuit, application-specific integrated circuit).

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

In short, the foregoing descriptions are merely exemplary embodiments of the present invention, but are not intended to limit the protection scope of the present invention. Any modification, equivalent replacement, or improvement made without departing from the spirit and principle of the present invention shall fall within the protection scope of the present invention.

## Claims

1. A service flow transmission method, wherein the method comprises:
determining, by a first gateway device, a target service currently performed by user equipment UE;
performing, by the first gateway device, a bearer processing operation, so as to obtain a target bearer corresponding to the target service, and binding a service flow of the target service to the target bearer; and
anchoring, by the first gateway device, the target bearer to a target gateway, and implementing, by using the target gateway, service flow transmission between the UE and a network that corresponds to the target service.

2. The method according to claim 1, wherein the method further comprises:
selecting, by the first gateway device, the target gateway for the target service according to a correspondence between a service and gateway deployment.

3. The method according to claim 2, wherein the selecting, by the first gateway device, the target gateway for the target service according to a correspondence between a service and gateway deployment comprises:
determining, by the first gateway device according to the correspondence between a service and gateway deployment, a list of target gateways capable of serving the UE, wherein the target gateway list comprises a plurality of gateways capable of serving the UE; and
determining, by the first gateway device from the plurality of gateways comprised in the target gateway list, a gateway as the target gateway.

4. The method according to claim 3, wherein the determining, by the first gateway device from the plurality of gateways comprised in the target gateway list, a gateway as the target gateway comprises:
if the plurality of gateways comprised in the target gateway list comprise a current gateway serving the UE and the current gateway satisfies a service requirement of the target service, determining, by the first gateway device, the current gateway as the target gateway.

5. The method according to claim 3, wherein the determining, by the first gateway device from the plurality of gateways comprised in the target gateway list, a gateway as the target gateway comprises:
if the plurality of gateways comprised in the target gateway list comprise a current gateway serving the UE and the current gateway does not satisfy a service requirement of the target service, determining, by the first gateway device from the plurality of gateways comprised in the target gateway list, a gateway other than the current gateway as the target gateway; or
if the plurality of gateways comprised in the target gateway list do not comprise a current gateway serving the UE, determining, by the first gateway device from the plurality of gateways comprised in the target gateway list, a gateway as the target gateway.

6. The method according to claim 5, wherein the performing, by the first gateway device, a bearer processing operation, so as to obtain a target bearer corresponding to the target service comprises:
when the target gateway is not the current gateway serving the UE, performing, by the first gateway device, a bearer creation process, so as to obtain the target bearer.

7. The method according to claim 1 or 2, wherein the performing, by the first gateway device, a bearer processing operation, so as to obtain a target bearer corresponding to the target service comprises:
performing, by the first gateway device, a bearer creation process, so as to obtain the target bearer; or
performing, by the first gateway device, a bearer modification process, so as to obtain the target bearer.

8. The method according to claim 7, wherein the performing, by the first gateway device, a bearer creation process, so as to obtain the target bearer comprises:
if quality of service class identifier QCI information of the target service is inconsistent with QCI information of each of all bearers of the UE, performing, by the first gateway device, the bearer creation process, so as to obtain the target bearer;
if QCI information of the target service is consistent with QCI information of a first bearer of the UE and a gateway to which the first bearer is anchored is incapable of serving the target service, performing, by the first gateway device, the bearer creation process, so as to obtain the target bearer; or
if the network in which the target service is located is an independent network, performing, by the first gateway device, the bearer creation process, so as to obtain the target bearer.

9. The method according to claim 7, wherein the performing, by the first gateway device, a bearer modification process, so as to obtain the target bearer comprises:
if quality of service class identifier QCI information of the target service is consistent with QCI information of a second bearer of the UE and a gateway to which the second bearer is anchored is capable of serving the target service, performing, by the first gateway device, the bearer modification process, so as to obtain the target bearer.

10. The method according to claim 1 or 2, wherein the anchoring, by the first gateway device, the target bearer to a target gateway comprises:
sending, by the first gateway device, information corresponding to the target bearer to the target gateway, wherein the information corresponding to the target bearer is used to implement the service flow transmission between the UE and the network that corresponds to the target service.

11. The method according to claim 10, wherein the information corresponding to the target bearer comprises S1_U interface serving gateway fully qualified tunnel endpoint identifier SGW F-TEID information, and the S1_U interface SGW F-TEID information is used to instruct the target gateway to receive an uplink service flow that matches the S1_U interface SGW F-TEID information and that is sent by the UE;
the information corresponding to the target bearer comprises traffic flow template TFT information, and the TFT information is used to instruct the target gateway to receive a downlink service flow that needs to be sent to the UE and that matches the TFT information; or
the information corresponding to the target bearer comprises S1-U interface evolved NodeB eNB F-TEID information, and the S1-U interface eNB F-TEID information is used to instruct the target gateway to send, to an eNB according to the S1-U interface eNB F-TEID information, a received downlink service flow that needs to be sent to the UE.

12. The method according to any one of claims 1 to 11, wherein the determining, by a first gateway device, a target service currently performed by user equipment UE comprises:
receiving, by the first gateway device, a service request message from the UE, wherein the service request message comprises packet characteristic information; and
determining, by the first gateway device, the target service according to the packet characteristic information.

13. The method according to any one of claims 1 to 11, wherein the determining, by a first gateway device, a target service currently performed by user equipment UE comprises:
receiving, by the first gateway device, a session modification request message from a policy and charging rules function PCRF entity, wherein the session modification request message comprises packet characteristic information; and
determining, by the first gateway device, the target service according to the packet characteristic information.

14. The method according to any one of claims 1 to 11, wherein the determining, by a first gateway device, a target service currently performed by user equipment UE comprises:
receiving, by the first gateway device, an event reported by a second gateway device, wherein the event is reported by the second gateway device when detecting that a service packet received by the second gateway device satisfies a preset condition; and
determining, by the first gateway device, the target service according to the event.

15. A service flow transmission apparatus, wherein the apparatus comprises a determining module, a bearer processing module, a binding module, an anchoring module, and a transmission module, wherein
the determining module is configured to determine a target service currently performed by user equipment UE;
the bearer processing module is configured to perform a bearer processing operation, so as to obtain a target bearer corresponding to the target service;
the binding module is configured to bind a service flow of the target service to the target bearer;
the anchoring module is configured to anchor the target bearer to a target gateway; and
the transmission module is configured to implement, by using the target gateway, service flow transmission between the UE and a network that corresponds to the target service.

16. The apparatus according to claim 15, wherein the apparatus further comprises a selection module, wherein
the selection module is configured to select the target gateway for the target service according to a correspondence between a service and gateway deployment.

17. The apparatus according to claim 16, wherein the selection module comprises a first determining sub-module and a second determining sub-module, wherein
the first determining sub-module is configured to determine, according to the correspondence between a service and gateway deployment, a list of target gateways capable of serving the UE, wherein the target gateway list comprises a plurality of gateways capable of serving the UE; and
the second determining sub-module is configured to determine, from the plurality of gateways comprised in the target gateway list, a gateway as the target gateway.

18. The apparatus according to claim 17, wherein a specific manner in which the second determining sub-module determines, from the plurality of gateways comprised in the target gateway list, a gateway as the target gateway is:
if the plurality of gateways comprised in the target gateway list comprise a current gateway serving the UE and the current gateway satisfies a service requirement of the target service, determining the current gateway as the target gateway.

19. The apparatus according to claim 17, wherein a specific manner in which the second determining sub-module determines, from the plurality of gateways comprised in the target gateway list, a gateway as the target gateway is:
if the plurality of gateways comprised in the target gateway list comprise a current gateway serving the UE and the current gateway does not satisfy a service requirement of the target service, determining, from the plurality of gateways comprised in the target gateway list, a gateway other than the current gateway as the target gateway; or
if the plurality of gateways comprised in the target gateway list do not comprise a current gateway serving the UE, determining, from the plurality of gateways comprised in the target gateway list, a gateway as the target gateway.

20. The apparatus according to claim 19, wherein a specific manner in which the bearer processing module performs a bearer processing operation, so as to obtain a target bearer corresponding to the target service is:
when the target gateway is not the current gateway serving the UE, performing a bearer creation process, so as to obtain the target bearer.

21. The apparatus according to claim 15 or 16, wherein a specific manner in which the bearer processing module performs a bearer processing operation, so as to obtain a target bearer corresponding to the target service is:
performing a bearer creation process, so as to obtain the target bearer; or
performing a bearer modification process, so as to obtain the target bearer.

22. The apparatus according to claim 21, wherein a specific manner in which the bearer processing module performs a bearer creation process, so as to obtain the target bearer is:
if quality of service class identifier QCI information of the target service is inconsistent with QCI information of each of all bearers of the UE, performing the bearer creation process, so as to obtain the target bearer;
if QCI information of the target service is consistent with QCI information of a first bearer of the UE and a gateway to which the first bearer is anchored is incapable of serving the target service, performing the bearer creation process, so as to obtain the target bearer; or
if the network in which the target service is located is an independent network, performing the bearer creation process, so as to obtain the target bearer.

23. The apparatus according to claim 21, wherein a specific manner in which the bearer processing module performs a bearer modification process, so as to obtain the target bearer is:
if quality of service class identifier QCI information of the target service is consistent with QCI information of a second bearer of the UE and a gateway to which the second bearer is anchored is capable of serving the target service, performing the bearer modification process, so as to obtain the target bearer.

24. The apparatus according to claim 15 or 16, wherein a specific manner in which the anchoring module anchors the target bearer to a target gateway is:
sending information corresponding to the target bearer to the target gateway, wherein the information corresponding to the target bearer is used to implement the service flow transmission between the UE and the network that corresponds to the target service.

25. The apparatus according to claim 24, wherein the information corresponding to the target bearer comprises S1_U interface serving gateway fully qualified tunnel endpoint identifier SGW F-TEID information, and the S1_U interface SGW F-TEID information is used to instruct the target gateway to receive an uplink service flow that matches the S1_U interface SGW F-TEID information and that is sent by the UE;
the information corresponding to the target bearer comprises traffic flow template TFT information, and the TFT information is used to instruct the target gateway to receive a downlink service flow that needs to be sent to the UE and that matches the TFT information; or
the information corresponding to the target bearer comprises S1-U interface evolved NodeB eNB F-TEID information, and the S1-U interface eNB F-TEID information is used to instruct the target gateway to send, to an eNB according to the S1-U interface eNB F-TEID information, a received downlink service flow that needs to be sent to the UE.

26. The apparatus according to any one of claims 15 to 24, wherein a specific manner in which the determining module determines a target service currently performed by user equipment UE is:
receiving a service request message from the UE, wherein the service request message comprises packet characteristic information; and
determining the target service according to the packet characteristic information.

27. The apparatus according to any one of claims 15 to 24, wherein a specific manner in which the determining module determines a target service currently performed by user equipment UE is:
receiving a session modification request message from a policy and charging rules function PCRF entity, wherein the session modification request message comprises packet characteristic information; and determining the target service according to the packet characteristic information.

28. The apparatus according to any one of claims 15 to 24, wherein a specific manner in which the determining module determines a target service currently performed by user equipment UE is:
receiving an event reported by a second gateway device, wherein the event is reported by the second gateway device when detecting that a service packet received by the second gateway device satisfies a preset condition; and determining the target service according to the event.
